# EUROPEAN PATENT SPECIFICATION

(11) **EP 4 527 701 B1**
(45) Date of publication and mention of the grant of the patent: **21.10.2026**
(21) Application number: 24165272.6
(22) Date of filing: 21.03.2024
(51) Int. Cl.: B60T 8/17, B60T 8/1755, B60W 30/045, B60W 40/06, A01B 69/00

(54) **METHODS AND SYSTEMS FOR ASSISTING AN ELECTRIC VEHICLE IN HEADLAND OPERATIONS**
VERFAHREN UND SYSTEME ZUR UNTERSTÜTZUNG EINES ELEKTROFAHRZEUGS BEI VORLANDBETRIEB
PROCÉDÉS ET SYSTÈMES D'ASSISTANCE D'UN VÉHICULE ÉLECTRIQUE DANS DES OPÉRATIONS DE BOUTURE

(30) Priority: 25.09.2023 IN 202341064356
(43) Date of publication of application: 26.03.2025
(73) Proprietor: Mahindra & Mahindra Limited, 603004 Chengalpattu (IN)
(72) Inventor: SARAVANAN, Natarajan, Chengalpattu (IN); SIVAKUMAR, Arumugham, Chengalpattu (IN); GOKILA, Ayyasamy, Chengalpattu (IN); PRAMOD, Singh, Chengalpattu (IN); ALI, Abbaas Mohd, Chengalpattu (IN); PAVITHRA, Sundaram, Chengalpattu (IN)
(74) Representative: Jilderda, Anne Ayolt

(56) References cited:
- EP-A2- 2 110 295
- WO-A1-2021/005406
- US-A1- 2021 271 255

## Description

### TECHNICAL FIELD

Embodiments disclosed herein relate to farm vehicles and more particularly, to optimizing the productivity and improving the stability of farm vehicles during headland operations, wherein the farm vehicles are electric vehicles.

### BACKGROUND

In field operations, such as during a headland turn, an operator of the vehicle has to perform multiple operations like steering, implement lifting and sometimes, performing inner wheel braking for making tighter turns. This can lead to operator fatigue and degrade the customer ownership experience.

Conventional ICE powered tractors have a single source of power and then the power is distributed generally through mechanical transmission. This restricts the tractor from having a variable wheelbase since front and rear axles are connected through mechanical drive.

For Indian farming applications, farmers may have different field sizes and 1-2% productivity will be lost while making headland turns. For example, the user may skip one or two rows, due to limitations when making turns.

Further, the condition of the soil may affect the stability of the vehicle while making turns during operations.

Prior art document WO2021005406A1 discloses a headland turning system for an agricultural machine. The system comprises a navigation unit, a steering angle sensor, a wheel movement detection means, a steering controller, and a braking controller. The navigation unit is mounted on the agricultural machine and is configured to receive radio signals from a satellite constellation, a correction data from a base station, and data relating to the attitude of the machine from an inertial measurement unit (IMU) to generate guidance commands for steering and braking the agricultural machine. The steering controller generates a steering control signal for actuating a steering actuator based on the steering guidance commands and measured steering angle. The braking controller generates a braking control signal for actuating a brake actuator of the agricultural machine based on the braking guidance commands to reduce headland space wastage during turning.

Prior art US 2021/271255 A1 discloses a system and method for executing multi-mode turns with a work vehicle during which a combination of both steering and braking is used to perform the associated turning operation. The work vehicle includes a plurality of traction members, at least one steering actuator configured to actuate a first pair of traction members of the plurality of traction members to adjust a steering angle of the work vehicle, and at least one steering brake configured to selectively brake at least one traction member of the plurality of traction members.

Prior art EP 2110295A2 discloses an electric ground working vehicle including left and right wheels independently driven by left and right electric motors respectively, caster wheels being steering control wheels capable of being freely steered, and a working apparatus driven for ground working. The control unit controls a regenerative brake driving unit so that electric power is regenerated from the left and right electric motors to an electric power source unit when the acceleration operating element is not operated during traveling to regeneratively brake the left and right wheels. The control unit controls the brake force of the wheels, so that the brake force of the wheel at the inside of a turn, among the left wheel and the right wheel can be made greater than the brake force of the wheel at the outside of a turn when the acceleration operating element is not operated during traveling and turn instructions are inputted from the turn operating element

### OBJECTS

The principal object of embodiments herein is to disclose methods and systems for optimizing the productivity and improving the stability of electric vehicles by assisting the vehicle to turn by rotating outer wheels faster as compared to inner wheels of the vehicle and rotating front wheels of the vehicle faster as compared to rear wheels of the vehicle, and selectively braking the rear wheels during headland operations.

Another object of embodiments herein is to achieve shorter turning radius by the vehicle when the vehicle is taking headland turns.

The invention is defined by the features of independent claims 1 and 7.

These and other aspects of the embodiments herein will be better appreciated and understood when considered in conjunction with the following description and the accompanying drawings. It should be understood, however, that the following descriptions, while indicating at least one embodiment and numerous specific details thereof, are given by way of illustration and not of limitation.

### BRIEF DESCRIPTION OF FIGURES

Embodiments herein are illustrated in the accompanying drawings, throughout which like reference letters indicate corresponding parts in the various figures. The embodiments herein will be better understood from the following description with reference to the drawings, in which:
FIG. 1 is a flowchart depicting the process of selecting a mode of operation for an electric vehicle, according to embodiments as disclosed herein;
FIG. 2 depicts an architecture for selecting a mode of operation of the vehicle, when the vehicle is taking a headland turn, according to embodiments as disclosed herein;
FIG. 3 depicts an architecture wherein a single traction motor is used for the front wheels and a single traction motor is used for the rear wheels, according to embodiments as disclosed herein;
FIGs. 4A, 4B, 4C and 4D are flowcharts depicting the process of using a single traction motor for the front wheels and a single traction motor for the rear wheels respectively, according to embodiments as disclosed herein;
FIG. 5 depicts an architecture wherein an independent traction motor is used for each of the front wheels and a single traction motor is used for the rear wheels, according to embodiments as disclosed herein;
FIGs. 6A, 6B, 6C and 6D are flowcharts depicting the process of using an independent traction motor for each of the front wheels and a single traction motor for the rear wheels, according to embodiments as disclosed herein;
FIG. 7 depicts an architecture wherein independent traction motors are used for each of the front wheels and are used for each of the rear wheels, according to embodiments as disclosed herein;
FIGs. 8A, 8B, 8C and 8D are flowcharts depicting the process of using independent traction motors for each of the front wheels and for each of the rear wheels, according to embodiments as disclosed herein; and
FIG. 9 is an example diagram depicting the angular range over which the brakes and/or the speed of the vehicle may be automatically adjusted, according to embodiments as disclosed herein.

### DETAILED DESCRIPTION

The embodiments herein and the various features and advantageous details thereof are explained more fully with reference to the non-limiting embodiments that are illustrated in the accompanying drawings and detailed in the following description. Descriptions of well-known components and processing techniques are omitted so as to not unnecessarily obscure the embodiments herein. The examples used herein are intended merely to facilitate an understanding of ways in which the embodiments herein may be practiced and to further enable those of skill in the art to practice the embodiments herein. Accordingly, the examples should not be construed as limiting the scope of the embodiments herein.

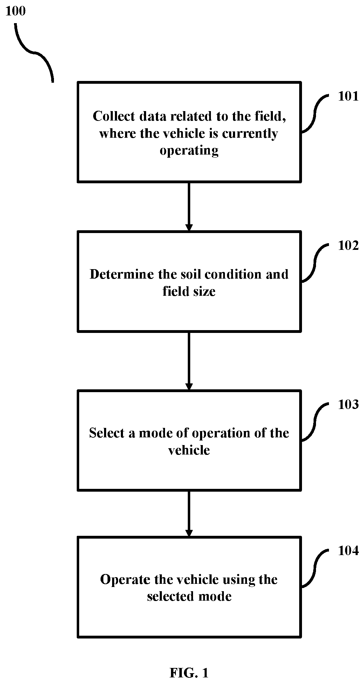

The embodiments herein achieve methods and systems for optimizing the productivity and improving the stability of electric vehicles by assisting the vehicle to turn by rotating outer wheels faster as compared to inner wheels of the vehicle and rotating front wheels of the vehicle faster as compared to rear wheels of the vehicle, and selectively braking respective rear wheel during headland operations. Referring now to the drawings, and more particularly to FIGS. 1 through 9, where similar reference characters denote corresponding features consistently throughout the figures, there are shown embodiments.

The farm vehicle as referred to herein can be any electric vehicle that operates in farms, similar environments, or its surroundings. Examples of the electric vehicle can be, but not limited to, tractors, ploughers, threshers, and so on.

Embodiments herein enable operators to attain tight headland turns with lower headland space. Embodiments herein can detect a plurality of parameters such as, field conditions (such as field size), soil condition (hard, soft, medium), implements(s) connected to the electric vehicle (if any), vehicle speed and location, and so on, and control the turning radius of the vehicle as per requirement in at least one mode. Embodiments herein may control the turning radius of the vehicle by automatically speeding up the front wheels or outer wheels based on field and vehicle conditions, wherein controlling the turning radius of the vehicle comprises adjusting one or more motors present on one or more axles of the vehicle.

FIG. 1 is a flowchart depicting the process of selecting a mode of operation for an electric vehicle. Consider that data related to the vehicle, such as, but not limited to, dimensions of the vehicle, turning radius of the vehicle (with/without braking), implement(s) currently connected to the vehicle, and so on, are pre-configured by an operator and/or authorized person. In step 101, the data related to the field, where the vehicle is currently operating, is collected. In an embodiment herein, the data can be collected using a camera (mounted on the vehicle), processing media from the camera, and estimating the field size and location of significant areas (such as the headlands) using the processed media. In an embodiment herein, the user/operator can provide the data related to the field. Using GPS data, a user interface (UI) can be used to display the current location of the vehicle to the user, and the user can mark out the location and size of the field, headland area on the user interface. In step 102, the soil condition is determined. Examples of the soil condition can be, but not limited to, hard, soft, medium, and so on. A draft sensor can be mounted in a suitable location on the vehicle (such as the 3-point linkage). The draft sensor can sense the soil in the field and determine the condition of the soil based on draft values. In step 103, a mode for operation of the vehicle is automatically selected, based on the determined soil conditions. In an embodiment herein, the mode can be selected manually. In an embodiment herein, the mode can be selected automatically, based on additional parameters, such as, current turning angle, farm size, soil conditions, current wheel angle, brake pedal status (actuated/not actuated), vehicle speed, and so on. In step 104, the vehicle is operated using the selected mode. The various actions in method 100 may be performed in the order presented, in a different order or simultaneously. Further, in some embodiments, some actions listed in FIG. 1 may be omitted.

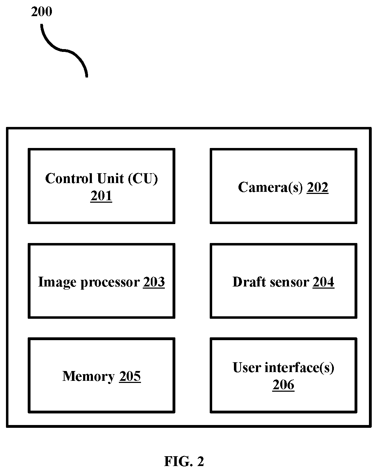

FIG. 2 depicts an architecture for selecting a mode of operation of the vehicle, when the vehicle is taking a headland turn. The system (200), as depicted, comprises a control unit (CU) (201), one or more cameras (202), an image processor (203), a draft sensor (204), a memory (205), and one or more user interfaces (206).

The one or more user interfaces (206) can enable the user and/or operator to interact with the vehicle, and perform one or more operation (such as selecting/de-selecting the mode of operation of the vehicle, providing data related to the farm/field, where the vehicle is operating, and so on). The user interface (206) can also enable the user to view data such as the currently selected mode, the speed of the vehicle, location of the user, and so on. Examples of the user interface (206) can be, but not limited to, a display, one or more switches, one or more lights, an instrument console, a panel, and so on. The user interface (206) can also comprise a device belonging to the user, such as, a mobile device, a phone, a tablet, a wearable device, a computer, an Internet of Things (IoT) device, and so on.

One or more cameras (202) can collect information of the location of the field. The information can be at least one of images, videos, and so on. The cameras can be mounted on the vehicle, in such locations so as to get a clear field of view of the location of the vehicle. The information can be provided to the image processor (203), wherein the image processor (203) can process the information. Examples of the processing done can be levelling, cropping out unnecessary portions (such as the sky), noise reduction, and so on. The processed information can be provided to the CU (201). The CU (201) can analyze the information to determine data related to the field, such as field size, shape, headland location, and so on.

The draft sensor (204) can determine the current soil condition. The draft sensor can be mounted in a suitable location on the vehicle (such as the 3-point linkage). The draft sensor (204) can sense the soil in the field and determine the condition of the soil based on the sensed draft values. The draft sensor (204) can provide the sensed draft values to the CU (201).

The CU (201), based on the information received from the image processor (203) and the draft sensor (204), and additional data (such as the soil draft value, current speed of the vehicle, current turning angle, current wheel angle, brake pedal status, implement width and so on), can determine the mode of operation of the vehicle. The mode of operation can be one of a low mode, a medium mode, and a high/aggressive mode. Based on the selected mode, the CU (201) can adjust the speed of the driving motors of the respective wheels and/or adjust the brakes of the vehicle, so as to enable the vehicle to make headland turns with minimal radius.

In an embodiment herein, the user can manually select the mode of operation using the user interface (206). Based on the selected mode, the CU (201) can adjust the speed of the driving motors of the respective wheels and/or adjust the brakes of the vehicle, so as to enable the vehicle to make headland turns with minimal radius.

The memory (205) stores at least one of, the vehicle data, the field data, camera feed, sensed soil conditions, currently selected mode, current operating conditions of the vehicle (such as speed, brake status, steering wheel angle, and so on), current implement(s) being used, and so on. Examples of the memory (205) may be, but are not limited to, NAND, embedded Multimedia Card (eMMC), Secure Digital (SD) cards, Universal Serial Bus (USB), Serial Advanced Technology Attachment (SATA), Solid-State Drive (SSD), and so on. Further, the memory (205) may include one or more computer-readable storage media. The memory (205) may include one or more non-volatile storage elements. Examples of such non-volatile storage elements may include Read Only Memory (ROM), magnetic hard discs, optical discs, floppy discs, flash memories, or forms of Electrically PROgrammable Memories (EPROM) or Electrically Erasable and PROgrammable Memories (EEPROM). In addition, the memory (205) may, in some examples, be considered a non-transitory storage medium. The term "non-transitory" may indicate that the storage medium is not embodied in a carrier wave or a propagated signal. However, the term "non-transitory" should not be interpreted to mean that the memory is nonmovable. In certain examples, a non-transitory storage medium may store data that may, over time, change (e.g., in Random Access Memory (RAM) or cache).

The vehicle can comprise of additional sensors/modules such as GPS sensors, wheel speed sensor, brake actuators, brake pedal latch sensors, and so on (not shown), which provide data and information to the CU (201) and/or to the user/operator.

Consider that the headland turn is not very complicated; i.e., the field size is sufficiently large that the headland turn is greater than the required width with respect to vehicle dimensions. In other words, the vehicle can perform a headland turn with a higher turning radius. The headland required for the low mode can be: 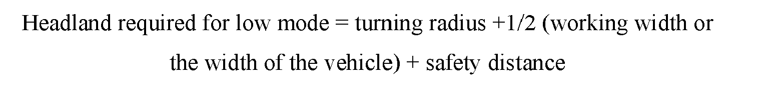 Headland required for low mode = turning radius +1/2 (working width or the width of the vehicle) + safety distance

Further, the soil draft value is greater than 1000kg. Accordingly, the CU (201) selects the low mode and displays instructions to the user. In an example, the CU (201) can inform the user to skip 2 rows and then attempt the headland turn. The CU (201) can activate the low mode, when the steering wheel angle is greater than a first pre-defined angle (for example, 30 degrees).

Consider that the headland turn is complicated; i.e., with respect to field size & vehicle dimension, headland turn is equal to the required width with respect to vehicle dimensions. The headland required for the medium mode can be: 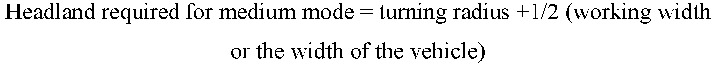 Headland required for medium mode = turning radius +1/2 (working width or the width of the vehicle)

Further, the soil draft value is greater than 500kg. Accordingly, the CU (201) selects the medium mode and displays instructions to the user. In an example, the CU (201) can inform the user to skip 1 row and then attempt the headland turn. The CU (201) can activate the medium mode, when the steering wheel angle is greater than a second pre-defined angle (for example, 25 degrees).

Consider that the headland turn is very complicated; i.e., space available for the headland turn is less than the space required by the vehicle for making a turn. The headland required for the high/aggressive mode can be: 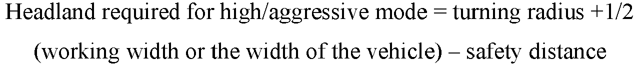 Headland required for high/aggressive mode = turning radius +1/2 (working width or the width of the vehicle) - safety distance

Further, the soil draft value is from 0 to 500kg. Accordingly, the CU (201) chooses the high/aggressive mode and displays instructions to the user. In an example, the CU (201) can inform the user to skip 1 row and then attempt the headland turn. The CU (201) can activate the high/aggressive mode, when the steering wheel angle is greater than a third pre-defined angle (for example, 20 degrees).

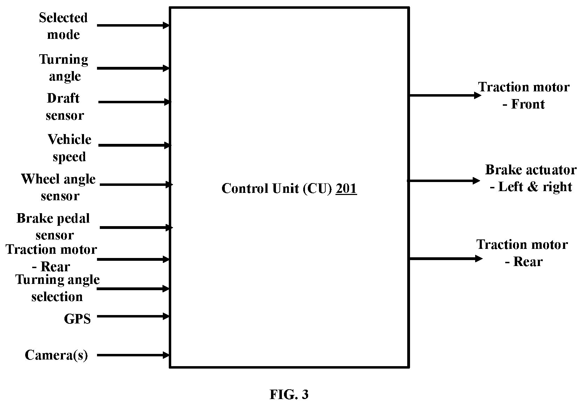

FIG. 3 depicts an architecture wherein a single traction motor is used for the front wheels and a single traction motor is used for the rear wheels. Both the front and rear axles of the vehicle have differential to enable the inner wheel to slip during a turning operation. Based on factors such as whether the mode has been selected manually, turning angle, soil conditions, vehicle speed, wheel angle (from the front right side), brake pedal latch status, inputs from the rear traction motor (TR), the GPS sensor and the camera, the CU (201) can actuate the inner wheel brake actuator and/or speed of the front wheels (based on the mode, that has been currently selected).

If the low mode has been selected, and if the output of the wheel angle sensor is greater than the first predefined angle, and the brake pedal latch switch is off, the CU (201) activates one of the brake actuators (either the left side or the right side), depending on which side the vehicle is turning. Depending on the turning side, the CU (201) can apply brakes to the respective inner rear wheel. The CU (201) can determine that the vehicle is making a right turn, by detecting that the wheel angle is positive. The CU (201) can determine that the vehicle is making a left turn, by detecting that the wheel angle is negative.

If the medium mode has been selected, and if the output of the wheel angle sensor is greater than the second predefined angle (but less than the first predefined angle), and the brake pedal latch switch is off, the CU (201) activates one of the brake actuators (either the left side or the right side), depending on which side the vehicle is turning. The CU (201) can determine that the vehicle is making a right turn, by detecting that the wheel angle is positive. The CU (201) can determine that the vehicle is making a left turn, by detecting that the wheel angle is negative. Depending on the turning side, the CU (201) can apply brakes to the respective inner rear wheel. The CU (201) can further increase the rotational speed of the front wheels to a first speed greater than the rotational speed of the rear wheels. In an example, the CU (201) can further increase the rotational speed of the front wheels to be 1.2 times faster, as compared to the rotational speed of the rear wheels.

If high/aggressive mode has been selected, and if the output of the wheel angle sensor is greater than the third predefined angle (but less than the second predefined angle), and the brake pedal latch switch is off, the CU (201) activates inner wheel brake actuators (either the left side or the right side), depending on which side the vehicle is turning. The CU (201) can determine that the vehicle is making a right turn, by detecting that the wheel angle is positive. The CU (201) can determine that the vehicle is making a left turn, by detecting that the wheel angle is negative. Depending on the turning side, the CU (201) can apply brakes to the respective inner rear wheel. The CU (201) can further increase the rotational speed of the front wheels to be a second speed greater than the rotational speed of the rear wheels. In an example, the CU (201) can further increase the rotational speed of the front wheels to be 1.6 times faster, as compared to the rotational speed of the rear wheels.

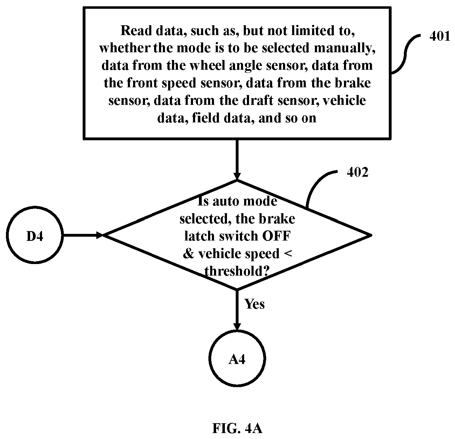

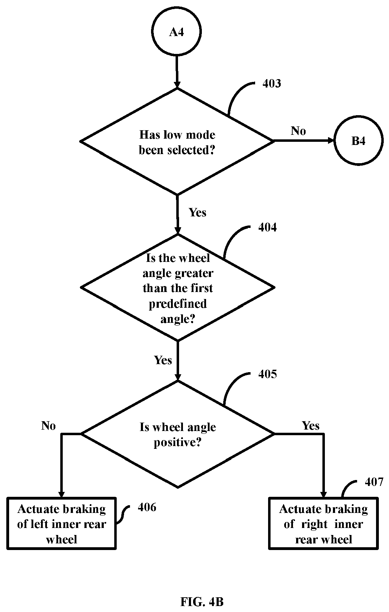

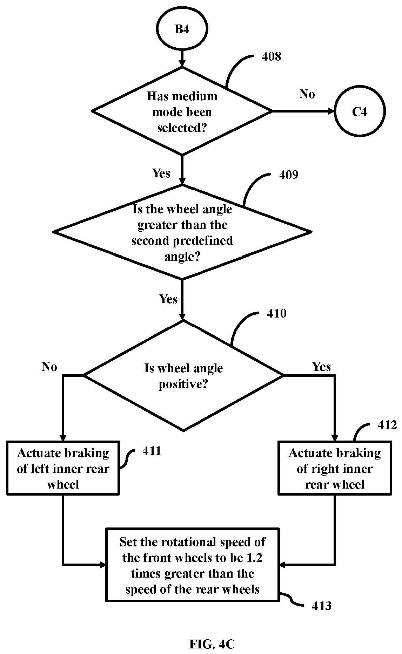

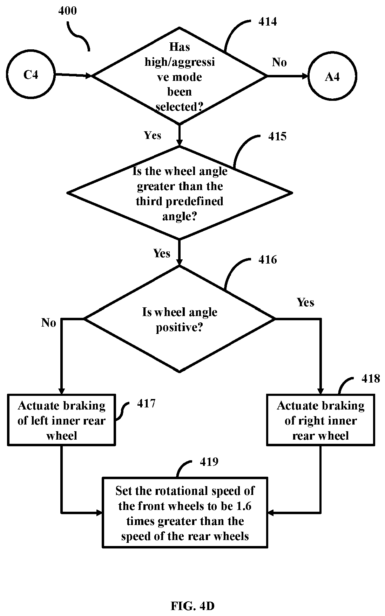

FIGs. 4A, 4B, 4C and 4D are flowcharts depicting the process of using a single traction motor for the front wheels and a single traction motor for the rear wheels respectively. In step 401, the CU (201) reads data, such as, but not limited to, whether the mode is to be selected manually, data from the wheel angle sensor, data from the front speed sensor, data from the brake latch switch, data from the draft sensor, vehicle data, field data, and so on. In step 402, the CU (201) checks if the mode has to be selected automatically, the brake latch switch is OFF, and the speed of the vehicle is less than a pre-defined speed threshold. If the mode has to be selected automatically, the brake latch switch is OFF, and the speed of the vehicle is less than a pre-defined speed threshold, in step 403, the CU (201) checks if the low mode has been selected. In the low mode has been selected, in step 404, the CU (201) checks if the wheel angle is greater than the first predefined angle. If the wheel angle is greater than the first predefined angle, in step 405, the CU (201) checks if the wheel angle is positive. If the wheel angle is not positive, in step 406, the CU (201) actuates braking of the left inner rear wheel. If the wheel angle is positive, in step 407, the CU (201) actuates braking of the right inner rear wheel.

If the low mode has not been selected, in step 408, the CU (201) checks if the medium mode has been selected. If the medium mode has been selected, in step 409, the CU (201) checks if the wheel angle is greater than the second predefined angle. If the wheel angle is greater than the second predefined angle, in step 410, the CU (201) checks if the wheel angle is positive. If the wheel angle is not positive, in step 411, the CU (201) actuates braking of the left inner rear wheel. If the wheel angle is positive in step 412, the CU (201) actuates braking of the right inner rear wheel. In step 413, the CU (201) sets the rotational speed of the front wheels to be a first speed greater than the speed of the rear wheels. In an example, the CU (201) can further increase the rotational speed of the front wheels to be 1.2 times faster, as compared to the rear wheels.

If the medium mode has not been selected, in step 414, the CU (201) checks if the high/aggressive mode has been selected. If the high/aggressive mode has been selected, in step 415, the CU (201) checks if the wheel angle is greater than the third predefined angle. If the wheel angle is greater than the third predefined angle, in step 416, the CU (201) checks if the wheel angle is positive. If the wheel angle is not positive, in step 417, the CU (201) actuates braking of the left inner rear wheel. If the wheel angle is positive, in step 418, the CU (201) actuates braking of the right inner rear wheel. In step 419, the CU (201) sets the rotational speed of the front wheels to be a second speed greater than the speed of the rear wheels. In an example, the CU (201) can further increase the rotational speed of the front wheels to be 1.6 times faster, as compared to the rear wheels. The various actions in method 400 may be performed in the order presented, in a different order or simultaneously. Further, in some embodiments, some actions listed in FIGs. 4A, 4B, 4C and 4D may be omitted.

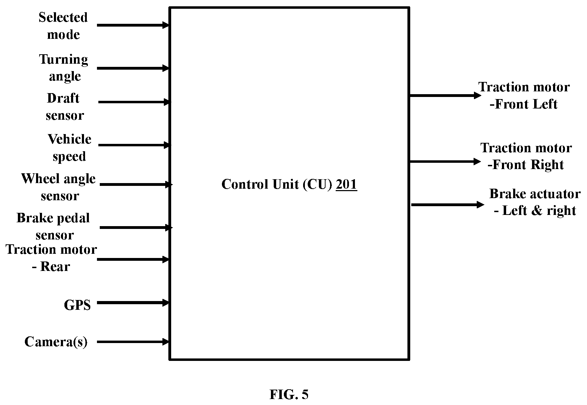

FIG. 5 depicts an architecture wherein an independent traction motor is used for each of the front wheels and a single traction motor is used for the rear wheels. Only the rear axles of the vehicle have a differential to enable the inner wheel to slip during a turning operation. Based on a plurality of factors (such as whether the mode has been selected manually, turning angle, soil conditions, vehicle speed, wheel angle, brake pedal latch status, the GPS sensor, and the camera), the CU (201) can actuate the inner wheel brake actuator and/or speed of the front wheels (based on the mode, that has been currently selected).

If the low mode has been selected, and if the output of the wheel angle sensor is greater than the first predefined angle, and the brake pedal latch switch is off, the CU (201) activates one of the brake actuators (either the left side or the right side), depending on which side the vehicle is turning. Depending on the turning side, the CU (201) can apply brakes to the respective inner rear wheel. The CU (201) can determine that the vehicle is making a right turn, by detecting that the wheel angle is positive. The CU (201) can determine that the vehicle is making a left turn, by detecting that the wheel angle is negative.

If the medium mode has been selected, and if the output of the wheel angle sensor is greater than the second predefined angle (but less than the first predefined angle), and the brake pedal latch switch is off, the CU (201) activates one of the brake actuators (either the left side or the right side), depending on which side the vehicle is turning. The CU (201) can determine that the vehicle is making a right turn, by detecting that the wheel angle is positive. The CU (201) can determine that the vehicle is making a left turn, by detecting that the wheel angle is negative. Depending on the turning side, the CU (201) can apply brakes to the respective inner rear wheel. The CU (201) can further increase the rotational speed of the front wheels to be a first speed greater than the rotational speed of the rear wheels. In an example, the CU (201) can further increase the rotational speed of the front wheels to be 1.2 times faster, as compared to the rear wheels. The CU (201) can further rotate the outer front wheel faster than the inner front wheel.

If high/aggressive mode has been selected, and if the output of the wheel angle sensor is greater than the third predefined angle, and the brake pedal latch switch is off, the CU (201) activates one of the brake actuators (either the left side or the right side), depending on which side the vehicle is turning. The CU (201) can determine that the vehicle is making a right turn, by detecting that the wheel angle is positive. The CU (201) can determine that the vehicle is making a left turn, by detecting that the wheel angle is negative. Depending on the turning side, the CU (201) can apply brakes to the respective inner rear wheel. The CU (201) can further increase the rotational speed of the front wheels to be a second speed greater than the rotational speed of the rear wheels. In an example, the CU (201) can further increase the rotational speed of the front wheels to be 1.6 times faster, as compared to the rotational speed of the rear wheels. The CU (201) can further increase the rotational speed of the front outer wheel to be a third speed greater than the speed of the front inner wheels. In an example, the CU (201) can further increase the rotational speed of the front outer wheels to be 1.2 times faster, as compared to the front inner wheels.

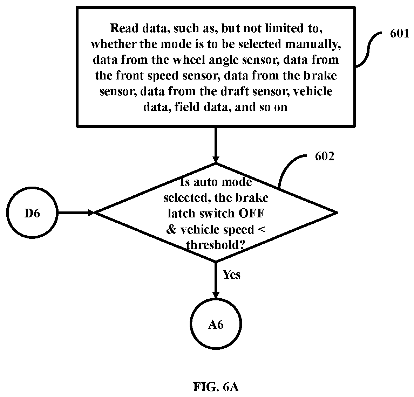

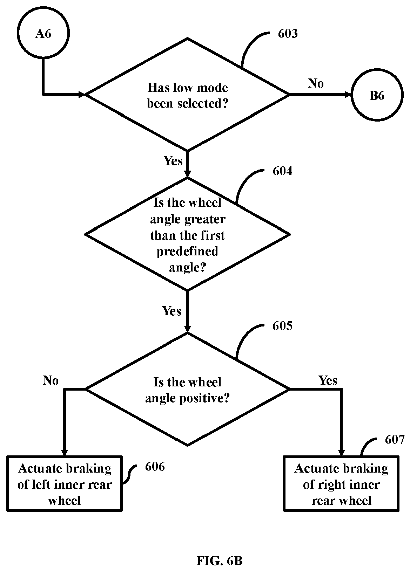

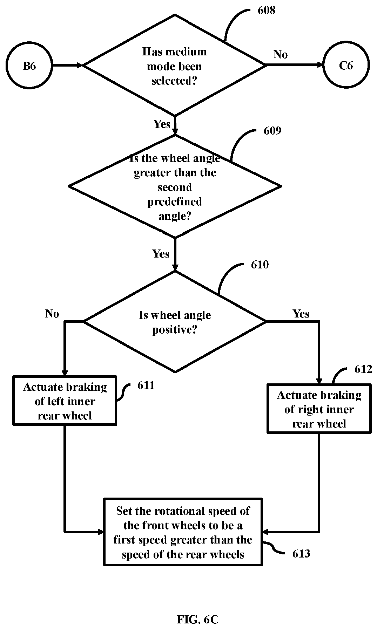

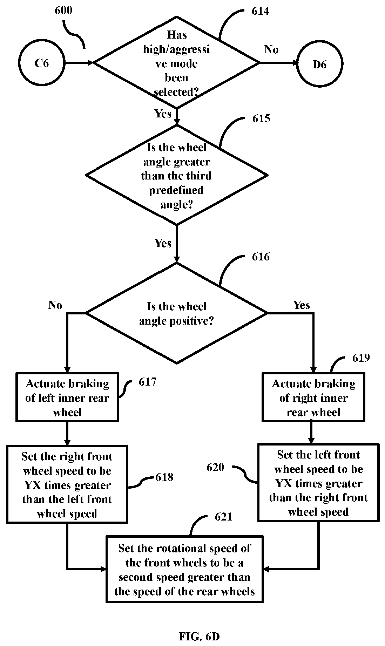

FIGs. 6A, 6B, 6C and 6D are flowcharts depicting the process of using an independent traction motor for each of the front wheels and a single traction motor for the rear wheels. In step 601, the CU (201) reads data, such as, but not limited to, whether the mode is to be selected manually, data from the wheel angle sensor, data from the front speed sensor, data from the rear speed sensor, data from the brake latch switch, data from the draft sensor, vehicle data, field data, and so on. In step 602, the CU (201) checks if the mode has to be selected automatically, the brake latch switch is OFF, and the vehicle speed is lower than the predefined speed threshold. If the mode has to be selected automatically, the brake latch switch is OFF, and the vehicle speed is lower than the predefined speed threshold, in step 603, the CU (201) checks if the low mode has been selected. If the low mode has been selected, in step 604, the CU (201) checks if the wheel angle is greater than the first predefined angle. If the wheel angle is greater than the first predefined angle, in step 605, the CU (201) checks if the wheel angle is positive. If the wheel angle is not positive, in step 606, the CU (201) actuates braking of the left inner rear wheel. If the wheel angle is positive, in step 607, the CU (201) actuates braking of the right inner rear wheel.

If the low mode has not been selected, in step 608, the CU (201) checks if the medium mode has been selected. If the medium mode has been selected, in step 609, the CU (201) checks if the wheel angle is greater than the second predefined angle. If the wheel angle is greater than the second predefined angle, in step 610, the CU (201) checks if the wheel angle is positive. If the wheel angle is not positive, in step 611, the CU (201) actuates braking of the left inner rear wheel. If the wheel angle is positive, in step 612, the CU (201) actuates braking of the right inner rear wheel. In step 613, the CU (201) sets the rotational speed of the front wheels to be a first speed greater than the speed of the rear wheels. In an example, the CU (201) can further increase the rotational speed of the front wheels to be 1.2 times faster, as compared to the rotational speed of the rear wheels.

If the medium mode has not been selected, in step 614, the CU (201) checks if the high/aggressive mode has been selected. If the high mode has been selected, in step 615, the CU (201) checks if the wheel angle is greater than the third predefined angle. If the wheel angle is greater than the third predefined angle, in step 616, the CU (201) checks if the wheel angle is positive. If the wheel angle is not positive, in step 617, the CU (201) actuates braking of the left inner rear wheel. In step 618, the CU (201) sets the right front wheel speed to be YX times greater than the left front wheel speed. In an example herein, the CU (201) sets the right front wheel speed to be 1.2 times (i.e., the value of YX is 1.2) greater than the left front wheel speed. If the wheel angle is positive, in step 619, the CU (201) actuates braking of the right inner rear wheel. In step 620, the CU 101 sets the left front wheel speed to be YX times greater than the right front wheel speed. In step 621, the CU (201) sets the rotational speed of the front wheels to be a second speed greater than the speed of the rear wheels. In an example, the CU (201) can further increase the rotational speed of the front wheels to be 1.6 times faster, as compared to the rotational speed of the rear wheels. The various actions in method 600 may be performed in the order presented, in a different order or simultaneously. Further, in some embodiments, some actions listed in FIGs. 6A, 6B, 6C and 6D may be omitted.

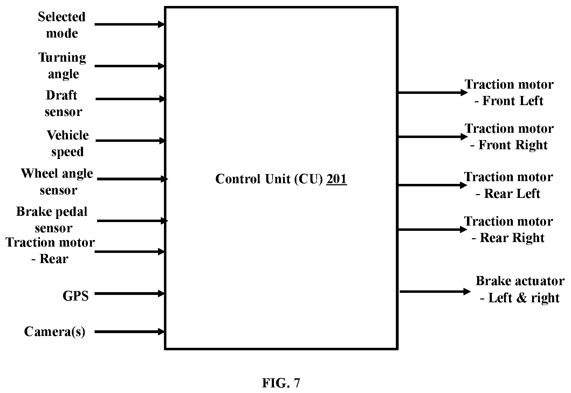

FIG. 7 depicts an architecture wherein independent traction motors are used for each of the front wheels and are used for each of the rear wheels. Consider that the vehicle is equipped with independent traction motor for each of the front wheels and the rear wheels. Based on factors such as whether the mode has been selected manually, turning angle, soil conditions, vehicle speed, wheel angle, brake pedal status, the GPS sensor and the camera, the CU (201) can actuate the inner wheel brake actuator and/or speed of the front wheels (based on the mode, that has been currently selected).

If the low mode has been selected, and if the output of the wheel angle sensor is greater than the first predefined angle, the CU (201) can reduce the speed of the inner rear wheel motor to near zero.

If the medium mode has been selected, and if the output of the wheel angle sensor is greater than the second predefined angle (but less than the first predefined angle), the CU (201) can reduce the speed of the inner rear wheel motor to near zero. The CU (201) can further increase the rotational speed of the front wheels to a first speed greater than the speed of the rear wheels. In an example, the CU (201) can further increase the rotational speed of the front wheels to be 1.2 times faster, as compared to the rotational speed of the rear wheels. The CU (201) can further rotate the outer front wheel faster than the inner front wheel.

If high/aggressive mode has been selected, and if the output of the wheel angle sensor is greater than the third predefined angle (but less than the second predefined angle), the CU (201) can reduce the speed of the inner rear wheel motor to near zero. The CU (201) can further increase the rotational speed of the front wheels to a second speed greater than the speed of the rear wheels. In an example, the CU (201) can further increase the rotational speed of the front wheels to be 1.6 times faster, as compared to the rotational speed of the rear wheels. The CU (201) can further increase the rotational speed of the front outer wheel to be a third speed greater than the speed of the front inner wheels. In an example, the CU (201) can further increase the rotational speed of the front outer wheels to be 1.2 times faster, as compared to the front inner wheels.

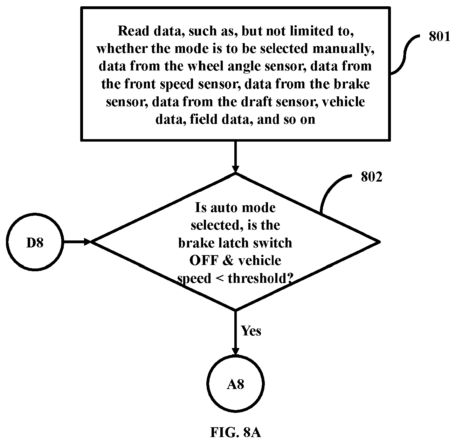

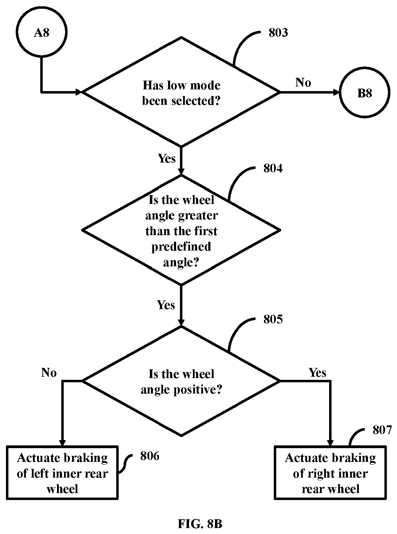

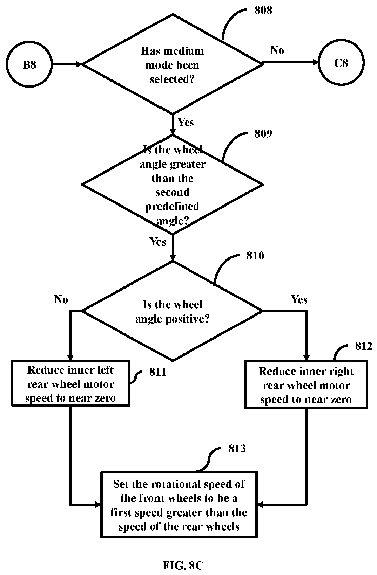

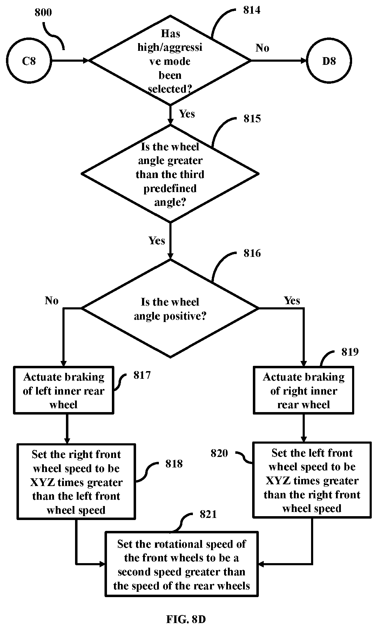

FIGs. 8A, 8B, 8C and 8D are flowcharts depicting the process of using independent traction motors for each of the front wheels and for each of the rear wheels. In step 801, the CU (201) reads data, such as, but not limited to, whether the mode is to be selected manually, data from the wheel angle sensor, data from the front speed sensor, data from the rear speed sensor, data from the brake latch switch, data from the draft sensor, vehicle data, field data, and so on. In step 802, the CU (201) checks if the mode has to be selected automatically, the brake latch switch is OFF, and the vehicle speed is less than the predefined speed threshold. If the mode has to be selected automatically, the brake latch switch is OFF, and the vehicle speed is less than the predefined speed threshold, in step 803, the CU (201) checks if the low mode has been selected. If the low mode has been selected, in step 804, the CU (201) checks if the wheel angle is greater than the first predefined angle. If the wheel angle is greater than the first predefined angle, in step 805, the CU (201) checks if the wheel angle is positive. If the wheel angle is not positive, in step 806, the CU (201) actuates braking of the left inner rear wheel. If the wheel angle is positive and the speed of the vehicle is less than the pre-defined speed threshold, in step 807, the CU (201) actuates the braking of the right inner rear wheel.

If the low mode has not been selected, in step 808, the CU (201) checks if the medium mode has been selected. If the medium mode has been selected, in step 809, the CU (201) checks if the wheel angle is greater than the second predefined angle. If the wheel angle is greater than the second predefined angle, in step 810, the CU (201) checks if the wheel angle is positive. If the wheel angle is not positive, in step 811, the CU (201) reduces the speed of the inner left rear wheel to near zero. If the wheel angle is positive, in step 812, the CU (201) . In step 813, the CU (201) sets the rotational speed of the front wheels to be a first speed greater than the speed of the rear wheels. In an example, the CU (201) can further increase the rotational speed of the front wheels to be 1.2 times faster, as compared to the rear wheels.

If the medium mode has not been selected, in step 814, the CU (201) checks if the high/aggressive mode has been selected. If the high/aggressive mode has been selected, in step 815, the CU (201) checks if the wheel angle is greater than the third predefined angle. If the wheel angle is greater than the third predefined angle, in step 816, the wheel angle is positive. If the wheel angle is not positive, in step 817, the CU (201) actuates braking of the left inner rear wheel. In step 818, the CU (201) sets the speed of the right front wheel to be XYZ times greater than the speed of the left front wheel. If the wheel angle is positive, in step 819, the CU (201) actuates braking of the right inner rear wheel. In step 820, the CU (201) sets the speed of the left front wheel to be XYZ times greater than the speed of the right front wheel. In step 821, the CU (201) sets the rotational speed of the front wheels to be a second speed greater than the speed of the rear wheels. In an example, the CU (201) can further increase the rotational speed of the front wheels to be 1.6 times faster, as compared to the rotational speed of the rear wheels.

The various actions in method 800 may be performed in the order presented, in a different order or simultaneously. Further, in some embodiments, some actions listed in FIGs. 8A, 8B, 8C and 8D may be omitted.

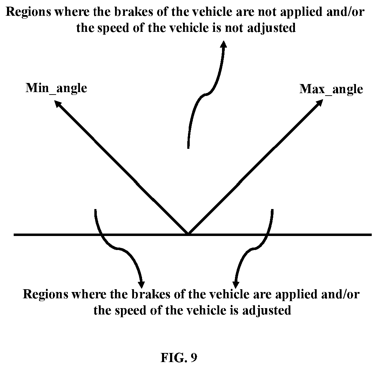

FIG. 9 is an example diagram depicting the angular range over which the brakes and/or the speed of the vehicle may be automatically adjusted. The CU (201) can check if the angle of the wheel is greater than the minimum angle (min_angle) or less than the maximum angle (max_angle), and the CU (201) can apply the brakes of the vehicle and/or adjust the speed of the vehicle (if the aforementioned angular conditions are met).

The embodiments disclosed herein can be implemented through at least one software program running on at least one hardware device and performing network management functions to control the network elements. The elements include blocks which can be at least one of a hardware device, or a combination of hardware device and software module.

The embodiment disclosed herein describes methods and systems for optimizing the productivity and improving the stability of electric vehicles by automatically speeding up front wheels and outer wheels of the vehicle, during operations. Therefore, it is understood that the scope of the protection is extended to such a program and in addition to a computer readable means having a message therein, such computer readable storage means contain program code means for implementation of one or more steps of the method, when the program runs on a server or mobile device or any suitable programmable device. The method is implemented in at least one embodiment through or together with a software program written in e.g., Very high speed integrated circuit Hardware Description Language (VHDL) another programming language, or implemented by one or more VHDL or several software modules being executed on at least one hardware device. The hardware device can be any kind of portable device that can be programmed. The device may also include means which could be e.g., hardware means like e.g., an ASIC, or a combination of hardware and software means, e.g., an ASIC and an FPGA, or at least one microprocessor and at least one memory with software modules located therein. The method embodiments described herein could be implemented partly in hardware and partly in software. Alternatively, the invention may be implemented on different hardware devices, e.g., using a plurality of CPUs.

The foregoing description of the specific embodiments will so fully reveal the general nature of the embodiments herein that others can, by applying current knowledge, readily modify and/or adapt for various applications such specific embodiments without departing from the generic concept, and, therefore, such adaptations and modifications should and are intended to be comprehended within the meaning of the disclosed embodiments. It is to be understooc that the phraseology or terminology employed herein is for the purpose of description and not of limitation. Therefore, while the embodiments herein have been described in terms of embodiments and examples, those skilled in the art will recognize that modifications are possible within the scope of the invention as defined by the appended claims.

## Claims

1. A method for assisting an electric vehicle in headland operations, the method comprising:
reading (401), by a control unit (201), data from wheel angle sensors, data from front wheel speed sensors, data from rear wheel speed sensors, data from brake latch switches, soil condition data from a draft sensor (204), vehicle data, and field data;
checking (402), by the control unit (201), if a brake latch switch is OFF, and vehicle speed is less than a pre-defined speed threshold, if a mode of operation for taking an headland turn in headland operation is to be selected automatically;
automatically selecting, by the control unit (201), said mode of operation as one of a low mode, a medium mode, and a high mode based on data from wheel angle sensors, data from the wheel speed sensors, data from the brake latch switches, the soil condition, the vehicle data, and the field data;
operating, by the control unit (201), one of a left inner rear wheel brake unit or a right inner rear wheel brake unit for selectively braking one of a left inner rear wheel or a right inner rear wheel respectively while taking a left turn or a right turn by the vehicle respectively according to the selected mode; and
operating, by the control unit (201), at least one wheel traction motor for controlling speed of rotation of wheels of the vehicle according to the selected mode.

2. The method, as claimed in claim 1, wherein the vehicle comprises a single traction motor for front wheels of the vehicle and a single traction motor for rear wheels of the vehicle, wherein the method further comprises
checking (403), by the control unit (201), if the low mode has been selected and if a wheel angle is greater than a first predefined angle; wherein if the wheel angle is greater than the first predefined angle, the method comprises:
checking (405), by the control unit (201), if the wheel angle is positive;
actuating (406), by the control unit (201), braking of a left inner rear wheel of the vehicle, if the wheel angle is not positive; and
actuating (407), by the control unit (201), braking of a right inner rear wheel of the vehicle, if the wheel angle is positive;
checking (408, 409), by the control unit (201), if medium mode has been selected and if a wheel angle is greater than a second predefined angle; wherein if the wheel angle is greater than the second predefined angle, the method comprises:
checking (410), by the control unit (201), if the wheel angle is positive;
actuating (411), by the control unit (201), braking of a left inner rear wheel of the vehicle, if the wheel angle is not positive;
actuating (412), by the control unit (201), braking of a right inner rear wheel of the vehicle, if the wheel angle is positive; and
setting (413), by the control unit (201), a rotational speed of the front wheels of the vehicle to be a first speed greater than speed of rear wheels of the vehicle; and
checking (414, 415), by the control unit (201), if the high mode has been selected and if a wheel angle is greater than a third predefined angle; wherein if the wheel angle is greater than the third predefined angle, the method comprises:
checking (416), by the control unit (201), if the wheel angle is positive;
actuating (417), by the control unit (201), braking of a left inner rear wheel of the vehicle, if the wheel angle is not positive;
actuating (418), by the control unit (201), braking of a right inner rear wheel of the vehicle, if the wheel angle is positive; and
setting (419), by the control unit (201), a rotational speed of the front wheels of the vehicle to be a second speed greater than speed of rear wheels of the vehicle.

3. The method, as claimed in claim 1, wherein the vehicle comprises an independent traction motor for each of front wheels of the vehicle and a single traction motor for rear wheels of the vehicle, wherein the method further comprises
checking (603, 604), by the control unit (201), if the low mode has been selected and if a wheel angle is greater than a first predefined angle; wherein if the wheel angle is greater than the first predefined angle, the method comprises:
checking (605), by the control unit (201), if the wheel angle is positive;
actuating (606), by the control unit (201), braking of a left inner rear wheel of the vehicle, if the wheel angle is not positive; and
actuating (607), by the control unit (201), braking of a right inner rear wheel of the vehicle, if the wheel angle is positive;
checking (608, 609), by the control unit (201), if the medium mode has been selected and if a wheel angle is greater than a second predefined angle; wherein if the wheel angle is greater than the second predefined angle, the method comprises:
checking (610), by the control unit (201), if the wheel angle is positive;
actuating (611), by the control unit (201), braking of a left inner rear wheel of the vehicle;
actuating (613), by the control unit (201), braking of a right inner rear wheel of the vehicle and setting (614), by the control unit (201), speed of the left front wheel to be greater than speed of the right front wheel, if the wheel angle is positive; and
setting (615), by the control unit (201), a rotational speed of the front wheels of the vehicle to be a first speed greater than speed of rear wheels of the vehicle; and
checking (616, 617), by the control unit (201), if the high mode has been selected and if a wheel angle is greater than a third predefined angle; wherein if the wheel angle is greater than the third predefined angle, the method comprises:
checking (618), by the control unit (201), if the wheel angle is positive;
actuating (619), by the control unit (201), braking of a left inner rear wheel of the vehicle and setting (620), by the control unit (201), speed of the right front wheel to be a first speed greater than speed of the left front wheel, if the wheel angle is not positive;
actuating (621), by the control unit (201), braking of a right inner rear wheel of the vehicle and setting (622), by the control unit (201), speed of the left front wheel to be a first speed greater than speed of the right front wheel, if the wheel angle is positive; and
setting (623), by the control unit (201), a rotational speed of the front wheels of the vehicle to be a second speed greater than speed of rear wheels of the vehicle.

4. The method, as claimed in claim 1, wherein front wheels and rear wheels of the vehicle use independent traction motors, wherein the method further comprises
checking (803, 804), by the control unit (201), if the low mode has been selected and if a wheel angle is greater than a first predefined angle; wherein if the wheel angle is greater than the first predefined angle, the method comprises:
checking (805), by the control unit (201), if the wheel angle is positive;
actuating (806), by the control unit (201), braking of a left inner rear wheel of the vehicle, if the wheel angle is not positive; and
actuating (807), by the control unit (201), braking of a right inner rear wheel of the vehicle, if the wheel angle is positive;
checking (808, 809), by the control unit (201), if the medium mode has been selected and if a wheel angle is greater than a second predefined angle; wherein if the wheel angle is greater than the second predefined angle, the method comprises:
checking (810), by the control unit (201), if the wheel angle is positive;
actuating (811), by the control unit (201), braking of a left inner rear wheel of the vehicle, if the wheel angle is not positive;
actuating (813), by the control unit (201), braking of a right inner rear wheel of the vehicle, if the wheel angle is positive; and
setting (815), by the control unit (201), a rotational speed of the front wheels of the vehicle to be a first speed greater than speed of rear wheels of the vehicle; and
checking (816, 817), by the control unit (201), if the high mode has been selected and if a wheel angle is greater than a third predefined angle; wherein if the wheel angle is greater than the third predefined angle, the method comprises:
checking (818), by the control unit (201), if the wheel angle is positive;
actuating (819), by the control unit (201), braking of a left inner rear wheel of the vehicle and setting (820), by the control unit (201), speed of the right front wheel to be a first speed greater than speed of the left front wheel, if the wheel angle is not positive;
actuating (821), by the control unit (201), braking of a right inner rear wheel of the vehicle and setting (822), by the control unit (201), speed of the left front wheel to be a first speed greater than speed of the right front wheel, if the wheel angle is positive; and
setting (823), by the control unit (201), a rotational speed of the front wheels of the vehicle to be a second speed greater than speed of rear wheels of the vehicle.

5. The method, as claimed in claim 1, wherein the method comprises selecting, by the control unit (201), the low mode, if
the headland required for the low mode is equal to sum of a turning radius of the vehicle, half a working width of the vehicle, and a safety distance; and
angle of the steering wheel of the vehicle is greater than a first predefined angle,
wherein in the low mode, the method comprises providing instructions to the user to skip two rows and then attempt the headland turn; selecting, by the control unit (201), the medium mode, if
the headland required for the medium mode is equal to sum of a turning radius of the vehicle, and half a working width of the vehicle; and
angle of the steering wheel of the vehicle is greater than a second pre-defined angle,
wherein in the medium mode, the method comprises providing instructions to the user to skip a row and then attempt the headland turn; and
selecting, by the control unit (201), the high mode, if
the headland required for the low mode is equal to sum of a turning radius of the vehicle, and half a working width of the vehicle, minus a safety distance; and
angle of the steering wheel of the vehicle is greater than a third predefined angle,
wherein in the high mode, the method comprises providing instructions to the user to skip a row and then attempt the headland turn.

6. The method, as claimed in claim 1, wherein the method comprises:
checking, by the control unit (201), if the wheel angle is greater than a minimum angle, or less than a maximum angle; and
performing, by the control unit (201), at least one of applying brakes of the vehicle; and
adjusting a speed of the vehicle,
if the wheel angle is greater than the minimum angle, or less than the maximum angle.

7. A system (200) for assisting an electric vehicle in headland operations, the system (200) comprising:
a control unit (201); and
a draft sensor (204),
wherein the control unit (201) is configured to:
read data from wheel angle sensors, data from front wheel speed sensors, data from rear wheel speed sensors, data from brake latch switches, soil condition data from the draft sensor (204), vehicle data, and field data;
check if a brake latch switch is OFF, and vehicle speed is less than a pre-defined speed threshold, if a mode of operation for taking an headland turn in headland operation is to be selected automatically;
automatically select said mode of operation for taking an headland turn in headland operation, said mode of operation being one of a low mode, a medium mode, and a high mode based on data from wheel angle sensors, data from the wheel speed sensors, data from the brake latch switches, the soil condition data, the vehicle data, and the field data;
operate one of a left inner rear wheel brake unit or a right inner rear wheel brake unit for selectively braking one of a left inner rear wheel or a right inner rear wheel respectively while taking a left turn or a right turn by the vehicle respectively according to the selected mode; and
operate at least one wheel traction motor for controlling speed of rotation of wheels of the vehicle according to the selected mode.

8. The system as claimed in claim 7, wherein the vehicle comprises a single traction motor for front wheels of the vehicle and a single traction motor for rear wheels of the vehicle, wherein the control unit (201) is further configured to:
check if the low mode has been selected and if a wheel angle is greater than a first predefined angle; wherein if the wheel angle is greater than the first predefined angle by:
check if the wheel angle is positive; actuate braking of a left inner rear wheel of the vehicle, if the wheel angle is not positive; and
actuate braking of a right inner rear wheel of the vehicle, if the wheel angle is positive;
check if medium mode has been selected and if a wheel angle is greater than a second predefined angle; wherein if the wheel angle is greater than the second predefined angle:
check if the wheel angle is positive;
actuate braking of a left inner rear wheel of the vehicle, if the wheel angle is not positive;
actuate braking of a right inner rear wheel of the vehicle, if the wheel angle is positive; and
set a rotational speed of the front wheels of the vehicle to be a first speed greater than speed of rear wheels of the vehicle; and
check if the high mode has been selected and if a wheel angle is greater than a third predefined angle; wherein if the wheel angle is greater than the third predefined angle:
check if the wheel angle is positive;
actuate braking of a left inner rear wheel of the vehicle, if the wheel angle is not positive;
actuate braking of a right inner rear wheel of the vehicle, if the wheel angle is positive; and
set a rotational speed of the front wheels of the vehicle to be a second speed greater than speed of rear wheels of the vehicle.

9. The system, as claimed in claim 8, wherein the vehicle comprises an independent traction motor for each of front wheels of the vehicle and a single traction motor for rear wheels of the vehicle, wherein the control unit (201) is further configured to:
check if the low mode has been selected and if a wheel angle is greater than a first predefined angle; wherein if the wheel angle is greater than the first predefined angle:
check if the wheel angle is positive;
actuate braking of a left inner rear wheel of the vehicle, if the wheel angle is not positive; and
actuate braking of a right inner rear wheel of the vehicle, if the wheel angle is positive;
check if the medium mode has been selected and if a wheel angle is greater than a second predefined angle; wherein if the wheel angle is greater than the second predefined angle:
check if the wheel angle is positive;
actuate braking of a left inner rear wheel of the vehicle;
actuate braking of a right inner rear wheel of the vehicle and setting speed of the left front wheel to be greater than speed of the right front wheel, if the wheel angle is positive; and
set a rotational speed of the front wheels of the vehicle to be a first speed greater than speed of rear wheels of the vehicle; and
check if the high mode has been selected and if a wheel angle is greater than a third predefined angle; wherein if the wheel angle is greater than the third predefined angle:
check if the wheel angle is positive;
actuate braking of a left inner rear wheel of the vehicle and setting speed of the right front wheel to be a first speed greater than speed of the left front wheel, if the wheel angle is not positive;
actuate braking of a right inner rear wheel of the vehicle and setting speed of the left front wheel to be a first speed greater than speed of the right front wheel, if the wheel angle is positive; and
set a rotational speed of the front wheels of the vehicle to be a second speed greater than speed of rear wheels of the vehicle.

10. The system, as claimed in claim 8, wherein front wheels and rear wheels of the vehicle use independent traction motors, wherein the control unit (201) is further configured to:
check if the low mode has been selected and if a wheel angle is greater than a first predefined angle; wherein if the wheel angle is greater than the first predefined angle:
check if the wheel angle is positive;
actuate braking of a left inner rear wheel of the vehicle, if the wheel angle is not positive; and
actuate braking of a right inner rear wheel of the vehicle, if the wheel angle is positive;
check if the medium mode has been selected and if a wheel angle is greater than a second predefined angle; wherein if the wheel angle is greater than the second predefined angle:
check if the wheel angle is positive;
actuate braking of a left inner rear wheel of the vehicle, if the wheel angle is not positive;
actuate braking of a right inner rear wheel of the vehicle, if the wheel angle is positive; and
set a rotational speed of the front wheels of the vehicle to be a first speed greater than speed of rear wheels of the vehicle; and
check if the high mode has been selected and if a wheel angle is greater than a third predefined angle; wherein if the wheel angle is greater than the third predefined angle:
check if the wheel angle is positive;
actuate braking of a left inner rear wheel of the vehicle and setting speed of the right front wheel to be a first speed greater than speed of the left front wheel, if the wheel angle is not positive;
actuate braking of a right inner rear wheel of the vehicle and setting speed of the left front wheel to be a first speed greater than speed of the right front wheel, if the wheel angle is positive; and
set a rotational speed of the front wheels of the vehicle to be a second speed greater than speed of rear wheels of the vehicle.

11. The system, as claimed in claim 8, wherein the control unit (201) is further configured to
select the low mode, if
the headland required for the low mode is equal to sum of a turning radius of the vehicle, half a working width of the vehicle, and a safety distance; and
angle of the steering wheel of the vehicle is greater than the first pre-defined angle,
wherein in the low mode, the control unit is configured to provide instructions to the user to skip two rows and then attempt the headland turn;
select the medium mode, if
the headland required for the medium mode is equal to sum of a turning radius of the vehicle, and half a working width of the vehicle; and
angle of the steering wheel of the vehicle is greater than a second pre-defined angle,
wherein in the medium mode, the control unit (201) is further configured to provide instructions to the user to skip a row and then attempt the headland turn; and
select the high mode, if
the headland required for the low mode is equal to sum of a turning radius of the vehicle, and half a working width of the vehicle, minus a safety distance; and
angle of the steering wheel of the vehicle is greater than a third predefined angle,
wherein in the high mode, the control unit (201) is further configured for providing instructions to the user to skip a row and then attempt the headland turn.

12. The system, as claimed in claim 8, wherein the control unit (201) is further configured for
checking if the wheel angle is greater than a minimum angle, or less than a maximum angle; and
performing at least one of applying brakes of the vehicle; and
adjusting a speed of the vehicle,
if the wheel angle is greater than the minimum angle, or less than the maximum angle.

## Patentansprüche

1. Ein Verfahren zum Unterstützen eines Elektrofahrzeugs bei Vorgewendeoperationen, das Verfahren umfassend:
Lesen (401), durch eine Steuereinheit (201), von Daten von Lenkwinkelsensoren, Daten von Vorderraddrehzahlsensoren, Daten von Hinterraddrehzahlsensoren, Daten von Bremsverriegelungsschaltern, Bodenzustandsdaten von einem Zugkraftsensor (204), Fahrzeugdaten und Felddaten;
Prüfen (402), durch die Steuereinheit (201), ob ein Bremsverriegelungsschalter AUS ist und die Fahrzeuggeschwindigkeit geringer als ein vordefinierter Geschwindigkeitsschwellenwert ist, ob ein Betriebsmodus zum Durchführen einer Vorgewendekurve bei einer Vorgewendeoperation automatisch ausgewählt werden soll:
automatisches Auswählen, durch die Steuereinheit (201), des genannten Betriebsmodus als einen von einem niedrigen Modus, einem mittleren Modus und einem hohen Modus basierend auf Daten von Lenkwinkelsensoren, Daten von den Raddrehzahlsensoren, Daten von den Bremsverriegelungsschaltern, dem Bodenzustand, den Fahrzeugdaten und den Felddaten;
Betreiben, durch die Steuereinheit (201), entweder einer linken inneren Hinterradbremseinheit oder einer rechten inneren Hinterradbremseinheit zum selektiven Bremsen entweder eines linken inneren Hinterrads oder eines rechten inneren Hinterrads jeweils während des Durchführens einer Linkskurve oder einer Rechtskurve durch das Fahrzeug jeweils gemäß dem ausgewählten Modus; und
Betreiben, durch die Steuereinheit (201), mindestens eines Radantriebsmotors zum Steuern der Drehgeschwindigkeit von Rädern des Fahrzeugs gemäß dem ausgewählten Modus.

2. Das Verfahren nach Anspruch 1, wobei das Fahrzeug einen einzelnen Antriebsmotor für Vorderräder des Fahrzeugs und einen einzelnen Antriebsmotor für Hinterräder des Fahrzeugs umfasst, wobei das Verfahren ferner umfasst: Prüfen (403), durch die Steuereinheit (201), ob der niedrige Modus ausgewählt worden ist und ob ein Radwinkel größer als ein erster vordefinierter Winkel ist; wobei, wenn der Radwinkel größer als der erste vordefinierte Winkel ist, das Verfahren umfasst:
Prüfen (405), durch die Steuereinheit (201), ob der Radwinkel positiv ist;
Betätigen (406), durch die Steuereinheit (201), des Bremsens eines linken inneren Hinterrads des Fahrzeugs, wenn der Radwinkel nicht positiv ist; und Betätigen (407), durch die Steuereinheit (201), des Bremsens eines rechten inneren Hinterrads des Fahrzeugs, wenn der Radwinkel positiv ist;
Prüfen (408, 409), durch die Steuereinheit (201), ob der mittlere Modus ausgewählt worden ist und ob ein Radwinkel größer als ein zweiter vordefinierter Winkel ist; wobei, wenn der Radwinkel größer als der zweite vordefinierte Winkel ist, das Verfahren umfasst:
Prüfen (410), durch die Steuereinheit (201), ob der Radwinkel positiv ist; Betätigen (411), durch die Steuereinheit (201), des Bremsens eines linken inneren Hinterrads des Fahrzeugs, wenn der Radwinkel nicht positiv ist;
Betätigen (412), durch die Steuereinheit (201), des Bremsens eines rechten inneren Hinterrads des Fahrzeugs, wenn der Radwinkel positiv ist; und
Einstellen (413), durch die Steuereinheit (201), einer Drehgeschwindigkeit der Vorderräder des Fahrzeugs auf eine erste Geschwindigkeit, die größer als die Geschwindigkeit der Hinterräder des Fahrzeugs ist; und
Prüfen (414, 415), durch die Steuereinheit (201), ob der hohe Modus ausgewählt worden ist und ob ein Radwinkel größer als ein dritter vordefinierter Winkel ist;
wobei, wenn der Radwinkel größer als der dritte vordefinierte Winkel ist, das Verfahren umfasst:
Prüfen (416), durch die Steuereinheit (201), ob der Radwinkel positiv ist;
Betätigen (417), durch die Steuereinheit (201), des Bremsens eines linken inneren Hinterrads des Fahrzeugs, wenn der Radwinkel nicht positiv ist;
Betätigen (418), durch die Steuereinheit (201), des Bremsens eines rechten inneren Hinterrads des Fahrzeugs, wenn der Radwinkel positiv ist; und
Einstellen (419), durch die Steuereinheit (201), einer Drehgeschwindigkeit der Vorderräder des Fahrzeugs auf eine zweite Geschwindigkeit, die größer als die Geschwindigkeit der Hinterräder des Fahrzeugs ist.

3. Das Verfahren nach Anspruch 1, wobei das Fahrzeug einen unabhängigen Antriebsmotor für jedes der Vorderräder des Fahrzeugs und einen einzelnen Antriebsmotor für die Hinterräder des Fahrzeugs umfasst, wobei das Verfahren ferner umfasst:
Prüfen (603, 604), durch die Steuereinheit (201), ob der niedrige Modus ausgewählt worden ist und ob ein Radwinkel größer als ein erster vordefinierter Winkel ist; wobei, wenn der Radwinkel größer als der erste vordefinierte Winkel ist, das Verfahren umfasst:
Prüfen (605), durch die Steuereinheit (201), ob der Radwinkel positiv ist;
Betätigen (606), durch die Steuereinheit (201), des Bremsens eines linken inneren Hinterrads des Fahrzeugs, wenn der Radwinkel nicht positiv ist; und
Betätigen (607), durch die Steuereinheit (201), des Bremsens eines rechten inneren Hinterrads des Fahrzeugs, wenn der Radwinkel positiv ist;
Prüfen (608, 609), durch die Steuereinheit (201), ob der mittlere Modus ausgewählt worden ist und ob ein Radwinkel größer als ein zweiter vordefinierter Winkel ist; wobei, wenn der Radwinkel größer als der zweite vordefinierte Winkel ist, das Verfahren umfasst:
Prüfen (610), durch die Steuereinheit (201), ob der Radwinkel positiv ist;
Betätigen (611), durch die Steuereinheit (201), des Bremsens eines linken inneren Hinterrads des Fahrzeugs;
Betätigen (613), durch die Steuereinheit (201), des Bremsens eines rechten inneren Hinterrads des Fahrzeugs und Einstellen (614), durch die Steuereinheit (201), der Geschwindigkeit des linken Vorderrads auf eine Geschwindigkeit, die größer als die Geschwindigkeit des rechten Vorderrads ist, wenn der Radwinkel positiv ist; und
Einstellen (615), durch die Steuereinheit (201), einer Drehgeschwindigkeit der Vorderräder des Fahrzeugs auf eine erste Geschwindigkeit, die größer als die Geschwindigkeit der Hinterräder des Fahrzeugs ist; und
Prüfen (616, 617), durch die Steuereinheit (201), ob der hohe Modus ausgewählt worden ist und ob ein Radwinkel größer als ein dritter vordefinierter Winkel ist;
wobei, wenn der Radwinkel größer als der dritte vordefinierte Winkel ist, das Verfahren umfasst:
Prüfen (618), durch die Steuereinheit (201), ob der Radwinkel positiv ist;
Betätigen (619), durch die Steuereinheit (201), des Bremsens eines linken inneren Hinterrads des Fahrzeugs und Einstellen (620), durch die Steuereinheit (201), der Geschwindigkeit des rechten Vorderrads auf eine erste Geschwindigkeit, die größer als die Geschwindigkeit des linken Vorderrads ist,
wenn der Radwinkel nicht positiv ist;
Betätigen (621), durch die Steuereinheit (201), des Bremsens eines rechten inneren Hinterrads des Fahrzeugs und Einstellen (622), durch die Steuereinheit (201), der Geschwindigkeit des linken Vorderrads auf eine erste Geschwindigkeit, die größer als die Geschwindigkeit des rechten Vorderrads ist, wenn der Radwinkel positiv ist; und
Einstellen (623), durch die Steuereinheit (201), einer Drehgeschwindigkeit der Vorderräder des Fahrzeugs auf eine zweite Geschwindigkeit, die größer als die Geschwindigkeit der Hinterräder des Fahrzeugs ist.

4. Das Verfahren nach Anspruch 1, wobei Vorderräder und Hinterräder des Fahrzeugs unabhängige Antriebsmotoren verwenden, wobei das Verfahren ferner umfasst:
Prüfen (803, 804), durch die Steuereinheit (201), ob der niedrige Modus ausgewählt worden ist und ob ein Radwinkel größer als ein erster vordefinierter Winkel ist; wobei, wenn der Radwinkel größer als der erste vordefinierte Winkel ist, das Verfahren umfasst:
Prüfen (805), durch die Steuereinheit (201), ob der Radwinkel positiv ist;
Betätigen (806), durch die Steuereinheit (201), des Bremsens eines linken inneren Hinterrads des Fahrzeugs, wenn der Radwinkel nicht positiv ist; und
Betätigen (807), durch die Steuereinheit (201), des Bremsens eines rechten inneren Hinterrads des Fahrzeugs, wenn der Radwinkel positiv ist;
Prüfen (808, 809), durch die Steuereinheit (201), ob der mittlere Modus ausgewählt worden ist und ob ein Radwinkel größer als ein zweiter vordefinierter Winkel ist; wobei, wenn der Radwinkel größer als der zweite vordefinierte Winkel ist, das Verfahren umfasst:
Prüfen (810), durch die Steuereinheit (201), ob der Radwinkel positiv ist;
Betätigen (811), durch die Steuereinheit (201), des Bremsens eines linken inneren Hinterrads des Fahrzeugs, wenn der Radwinkel nicht positiv ist;
Betätigen (813), durch die Steuereinheit (201), des Bremsens eines rechten inneren Hinterrads des Fahrzeugs, wenn der Radwinkel positiv ist; und
Einstellen (815), durch die Steuereinheit (201), einer Drehgeschwindigkeit der Vorderräder des Fahrzeugs auf eine erste Geschwindigkeit, die größer als die Geschwindigkeit der Hinterräder des Fahrzeugs ist; und
Prüfen (816, 817), durch die Steuereinheit (201), ob der hohe Modus ausgewählt worden ist und ob ein Radwinkel größer als ein dritter vordefinierter Winkel ist;
wobei, wenn der Radwinkel größer als der dritte vordefinierte Winkel ist, das Verfahren umfasst:
Prüfen (818), durch die Steuereinheit (201), ob der Radwinkel positiv ist;
Betätigen (819), durch die Steuereinheit (201), des Bremsens eines linken inneren Hinterrads des Fahrzeugs und Einstellen (820), durch die Steuereinheit (201), der Geschwindigkeit des rechten Vorderrads auf eine erste Geschwindigkeit, die größer als die Geschwindigkeit des linken Vorderrads ist,
wenn der Radwinkel nicht positiv ist;
Betätigen (821), durch die Steuereinheit (201), des Bremsens eines rechten inneren Hinterrads des Fahrzeugs und Einstellen (822), durch die Steuereinheit (201), der Geschwindigkeit des linken Vorderrads auf eine erste Geschwindigkeit, die größer als die Geschwindigkeit des rechten Vorderrads ist,
wenn der Radwinkel positiv ist; und
Einstellen (823), durch die Steuereinheit (201), einer Drehgeschwindigkeit der Vorderräder des Fahrzeugs auf eine zweite Geschwindigkeit, die größer als die Geschwindigkeit der Hinterräder des Fahrzeugs ist.

5. Das Verfahren nach Anspruch 1, wobei das Verfahren umfasst: Auswählen, durch die Steuereinheit (201), des niedrigen Modus, wenn das für den niedrigen Modus erforderliche Vorgewende gleich der Summe aus einem Wenderadius des Fahrzeugs, der Hälfte einer Arbeitsbreite des Fahrzeugs und einem Sicherheitsabstand ist; und
der Winkel des Lenkrads des Fahrzeugs größer als ein erster vordefinierter Winkel ist,
wobei das Verfahren in dem niedrigen Modus umfasst, dem Benutzer Anweisungen bereitzustellen, zwei Reihen zu überspringen und dann die Vorgewendekurve zu versuchen; Auswählen, durch die Steuereinheit (201), des mittleren Modus, wenn
das für den mittleren Modus erforderliche Vorgewende gleich der Summe aus einem Wenderadius des Fahrzeugs und der Hälfte einer Arbeitsbreite des Fahrzeugs ist; und
der Winkel des Lenkrads des Fahrzeugs größer als ein zweiter vordefinierter Winkel ist, wobei das Verfahren in dem mittleren Modus umfasst, dem Benutzer Anweisungen bereitzustellen, eine Reihe zu überspringen und dann die Vorgewendekurve zu versuchen; und
Auswählen, durch die Steuereinheit (201), des hohen Modus, wenn das für den niedrigen Modus erforderliche Vorgewende gleich der Summe aus einem Wenderadius des Fahrzeugs und der Hälfte einer Arbeitsbreite des Fahrzeugs ist; minus einem Sicherheitsabstand; und
der Winkel des Lenkrads des Fahrzeugs größer als ein dritter vordefinierter Winkel ist,
wobei das Verfahren in dem hohen Modus umfasst, dem Benutzer Anweisungen bereitzustellen, eine Reihe zu überspringen und dann die Vorgewendekurve zu versuchen.

6. Das Verfahren nach Anspruch 1, wobei das Verfahren umfasst:
Prüfen, durch die Steuereinheit (201), ob der Radwinkel größer als ein Mindestwinkel oder kleiner als ein Höchstwinkel ist; und
Durchführen, durch die Steuereinheit (201), von mindestens einem aus dem Betätigen von Bremsen des Fahrzeugs; und
dem Anpassen einer Geschwindigkeit des Fahrzeugs,
wenn der Radwinkel größer als der Mindestwinkel oder kleiner als der Höchstwinkel ist.

7. Ein System (200) zum Unterstützen eines Elektrofahrzeugs bei Vorgewendeoperationen, wobei das System (200) umfasst:
eine Steuereinheit (201); und
einen Zugkraftsensor (204),
wobei die Steuereinheit (201) konfiguriert ist zum:
Lesen von Daten von Lenkwinkelsensoren, Daten von Vorderraddrehzahlsensoren, Daten von Hinterraddrehzahlsensoren, Daten von Bremsverriegelungsschaltern, Bodenzustandsdaten von dem Zugkraftsensor (204), Fahrzeugdaten und Felddaten;
Prüfen, ob ein Bremsverriegelungsschalter AUS ist und die Fahrzeuggeschwindigkeit geringer als ein vordefinierter Geschwindigkeitsschwellenwert ist, ob ein Betriebsmodus zum Durchführen einer Vorgewendekurve bei einer Vorgewendeoperation automatisch ausgewählt werden soll;
automatisches Auswählen des genannten Betriebsmodus zum Durchführen einer Vorgewendekurve bei einer Vorgewendeoperation,
wobei der genannte Betriebsmodus einer von einem niedrigen Modus, einem mittleren Modus und einem hohen Modus ist, basierend auf Daten von Lenkwinkelsensoren, Daten von den Raddrehzahlsensoren, Daten von den Bremsverriegelungsschaltern, den Bodenzustandsdaten, den Fahrzeugdaten und den Felddaten;
Betreiben entweder einer linken inneren Hinterradbremseinheit oder einer rechten inneren Hinterradbremseinheit zum selektiven Bremsen entweder eines linken inneren Hinterrads oder eines rechten inneren Hinterrads jeweils während des Durchführens einer Linkskurve oder einer Rechtskurve durch das Fahrzeug jeweils gemäß dem ausgewählten Modus; und
Betreiben mindestens eines Radantriebsmotors zum Steuern der Drehgeschwindigkeit von Rädern des Fahrzeugs gemäß dem ausgewählten Modus.

8. Das System nach Anspruch 7, wobei das Fahrzeug einen einzelnen Antriebsmotor für Vorderräder des Fahrzeugs und einen einzelnen Antriebsmotor für Hinterräder des Fahrzeugs umfasst, wobei die Steuereinheit (201) ferner konfiguriert ist zum:
Prüfen, ob der niedrige Modus ausgewählt worden ist und ob ein Radwinkel größer als ein erster vordefinierter Winkel ist; wobei, wenn der Radwinkel größer als der erste vordefinierte Winkel ist, durch:
Prüfen, ob der Radwinkel positiv ist;
Betätigen des Bremsens eines linken inneren Hinterrads des Fahrzeugs, wenn der Radwinkel nicht positiv ist; und
Betätigen des Bremsens eines rechten inneren Hinterrads des Fahrzeugs, wenn der Radwinkel positiv ist;
Prüfen, ob der mittlere Modus ausgewählt worden ist und ob ein Radwinkel größer als ein zweiter vordefinierter Winkel ist; wobei, wenn der Radwinkel größer als der zweite vordefinierte Winkel ist:
Prüfen, ob der Radwinkel positiv ist;
Betätigen des Bremsens eines linken inneren Hinterrads des Fahrzeugs, wenn der Radwinkel nicht positiv ist;
Betätigen des Bremsens eines rechten inneren Hinterrads des Fahrzeugs, wenn der Radwinkel positiv ist; und
Einstellen einer Drehgeschwindigkeit der Vorderräder des Fahrzeugs auf eine erste Geschwindigkeit, die größer als die Geschwindigkeit der Hinterräder des Fahrzeugs ist; und Prüfen, ob der hohe Modus ausgewählt worden ist und ob ein Radwinkel größer als ein dritter vordefinierter Winkel ist; wobei, wenn der Radwinkel größer als der dritte vordefinierte Winkel ist:
Prüfen, ob der Radwinkel positiv ist;
Betätigen des Bremsens eines linken inneren Hinterrads des Fahrzeugs, wenn der Radwinkel nicht positiv ist;
Betätigen des Bremsens eines rechten inneren Hinterrads des Fahrzeugs, wenn der Radwinkel positiv ist; und
Einstellen einer Drehgeschwindigkeit der Vorderräder des Fahrzeugs auf eine zweite Geschwindigkeit, die größer als die Geschwindigkeit der Hinterräder des Fahrzeugs ist.

9. Das System nach Anspruch 8, wobei das Fahrzeug einen unabhängigen Antriebsmotor für jedes der Vorderräder des Fahrzeugs und einen einzelnen Antriebsmotor für die Hinterräder des Fahrzeugs umfasst, wobei die Steuereinheit (201) ferner konfiguriert ist zum:
Prüfen, ob der niedrige Modus ausgewählt worden ist und ob ein Radwinkel größer als ein erster vordefinierter Winkel ist; wobei, wenn der Radwinkel größer als der erste vordefinierte Winkel ist:
Prüfen, ob der Radwinkel positiv ist;
Betätigen des Bremsens eines linken inneren Hinterrads des Fahrzeugs, wenn der Radwinkel nicht positiv ist; und
Betätigen des Bremsens eines rechten inneren Hinterrads des Fahrzeugs, wenn der Radwinkel positiv ist;
Prüfen, ob der mittlere Modus ausgewählt worden ist und ob ein Radwinkel größer als ein zweiter vordefinierter Winkel ist; wobei, wenn der Radwinkel größer als der zweite vordefinierte Winkel ist.
Prüfen, ob der Radwinkel positiv ist;
Betätigen des Bremsens eines linken inneren Hinterrads des Fahrzeugs;
Betätigen des Bremsens eines rechten inneren Hinterrads des Fahrzeugs und
Einstellen der Geschwindigkeit des linken Vorderrads auf eine Geschwindigkeit,
die größer als die Geschwindigkeit des rechten Vorderrads ist, wenn der Radwinkel positiv ist; und
Einstellen einer Drehgeschwindigkeit der Vorderräder des Fahrzeugs auf eine erste Geschwindigkeit, die größer als die Geschwindigkeit der Hinterräder des Fahrzeugs ist; und
Prüfen, ob der hohe Modus ausgewählt worden ist und ob ein Radwinkel größer als ein dritter vordefinierter Winkel ist; wobei, wenn der Radwinkel größer als der dritte vordefinierte Winkel ist:
Prüfen, ob der Radwinkel positiv ist,
Betätigen des Bremsens eines linken inneren Hinterrads des Fahrzeugs und
Einstellen der Geschwindigkeit des rechten Vorderrads auf eine erste Geschwindigkeit, die größer als die Geschwindigkeit des linken Vorderrads ist,
wenn der Radwinkel nicht positiv ist;
Betätigen des Bremsens eines rechten inneren Hinterrads des Fahrzeugs und Einstellen der Geschwindigkeit des linken Vorderrads auf eine erste Geschwindigkeit, die größer als die Geschwindigkeit des rechten Vorderrads ist, wenn der Radwinkel positiv ist; und
Einstellen einer Drehgeschwindigkeit der Vorderräder des Fahrzeugs auf eine zweite Geschwindigkeit, die größer als die Geschwindigkeit der Hinterräder des Fahrzeugs ist.

10. Das System nach Anspruch 8, wobei Vorderräder und Hinterräder des Fahrzeugs unabhängige Antriebsmotoren verwenden, wobei die Steuereinheit (201) ferner konfiguriert ist zum:
Prüfen, ob der niedrige Modus ausgewählt worden ist und ob ein Radwinkel größer als ein erster vordefinierter Winkel ist; wobei, wenn der Radwinkel größer als der erste vordefinierte Winkel ist:
Prüfen, ob der Radwinkel positiv ist;
Betätigen des Bremsens eines linken inneren Hinterrads des Fahrzeugs, wenn der Radwinkel nicht positiv ist; und
Betätigen des Bremsens eines rechten inneren Hinterrads des Fahrzeugs, wenn der Radwinkel positiv ist;
Prüfen, ob der mittlere Modus ausgewählt worden ist und ob ein Radwinkel größer als ein zweiter vordefinierter Winkel ist; wobei, wenn der Radwinkel größer als der zweite vordefinierte Winkel ist:
Prüfen, ob der Radwinkel positiv ist;
Betätigen des Bremsens eines linken inneren Hinterrads des Fahrzeugs, wenn der Radwinkel nicht positiv ist;
Betätigen des Bremsens eines rechten inneren Hinterrads des Fahrzeugs, wenn der Radwinkel positiv ist; und
Einstellen einer Drehgeschwindigkeit der Vorderräder des Fahrzeugs auf eine erste Geschwindigkeit, die größer als die Geschwindigkeit der Hinterräder des Fahrzeugs ist; und
Prüfen, ob der hohe Modus ausgewählt worden ist und ob ein Radwinkel größer als ein dritter vordefinierter Winkel ist; wobei, wenn der Radwinkel größer als der dritte vordefinierte Winkel ist:
Prüfen, ob der Radwinkel positiv ist;
Betätigen des Bremsens eines linken inneren Hinterrads des Fahrzeugs und Einstellen der Geschwindigkeit des rechten Vorderrads auf eine erste Geschwindigkeit, die größer als die Geschwindigkeit des linken Vorderrads ist, wenn der Radwinkel nicht positiv ist;
Betätigen des Bremsens eines rechten inneren Hinterrads des Fahrzeugs und Einstellen der Geschwindigkeit des linken Vorderrads auf eine erste Geschwindigkeit, die größer als die Geschwindigkeit des rechten Vorderrads ist, wenn der Radwinkel positiv ist; und
Einstellen einer Drehgeschwindigkeit der Vorderräder des Fahrzeugs auf eine zweite Geschwindigkeit, die größer als die Geschwindigkeit der Hinterräder des Fahrzeugs ist.

11. Das System nach Anspruch 8, wobei die Steuereinheit (201) ferner konfiguriert ist zum
Auswählen des niedrigen Modus, wenn
das für den niedrigen Modus erforderliche Vorgewende gleich der Summe aus einem Wenderadius des Fahrzeugs, der Hälfte einer Arbeitsbreite des Fahrzeugs und einem Sicherheitsabstand ist; und
der Winkel des Lenkrads des Fahrzeugs größer als der erste vordefinierte Winkel ist,
wobei in dem niedrigen Modus die Steuereinheit konfiguriert ist, dem Benutzer Anweisungen bereitzustellen, zwei Reihen zu überspringen und dann die Vorgewendekurve zu versuchen;
den mittleren Modus auszuwählen, wenn
das für den mittleren Modus erforderliche Vorgewende gleich der Summe aus einem Wenderadius des Fahrzeugs und der Hälfte einer Arbeitsbreite des Fahrzeugs ist; und
der Winkel des Lenkrads des Fahrzeugs größer als ein zweiter vordefinierter Winkel ist,
wobei in dem mittleren Modus die Steuereinheit (201) ferner konfiguriert ist, dem Benutzer Anweisungen bereitzustellen, eine Reihe zu überspringen und dann die Vorgewendekurve zu versuchen; und
den hohen Modus auszuwählen, wenn
das für den niedrigen Modus erforderliche Vorgewende gleich der Summe aus einem Wenderadius des Fahrzeugs und der Hälfte einer Arbeitsbreite des Fahrzeugs ist, minus einem Sicherheitsabstand; und
der Winkel des Lenkrads des Fahrzeugs größer als ein dritter vordefinierter Winkel ist,
wobei in dem hohen Modus die Steuereinheit (201) ferner konfiguriert ist, dem Benutzer Anweisungen bereitzustellen, eine Reihe zu überspringen und dann die Vorgewendekurve zu versuchen.

12. Das System nach Anspruch 8, wobei die Steuereinheit (201) ferner konfiguriert ist zum
Prüfen, ob der Radwinkel größer als ein Mindestwinkel oder kleiner als ein Höchstwinkel ist; und
Durchführen von mindestens einem aus dem Betätigen von Bremsen des Fahrzeugs; und
dem Anpassen einer Geschwindigkeit des Fahrzeugs,
wenn der Radwinkel größer als der Mindestwinkel oder kleiner als der Höchstwinkel ist.

## Revendications

1. Procédé destiné à faciliter les manœuvres en bout de champ d'un véhicule électrique, ce procédé comprenant :
la lecture (401), par une unité de commande (201), des données provenant des capteurs d'angle de braquage, des données provenant des capteurs de vitesse des roues avant, des données provenant des capteurs de vitesse des roues arrière, des données provenant des contacteurs de verrouillage des freins, des données sur l'état du sol provenant d'un capteur de traction (204), des données relatives au véhicule et des données relatives au champ ;
la vérification (402), par l'unité de commande (201), si un contacteur de verrouillage des freins est en position OFF et si la vitesse du véhicule est inférieure à un seuil de vitesse prédéfini, afin de déterminer si un mode de fonctionnement permettant d'effectuer un virage en bout de champ doit être sélectionné automatiquement ;
la sélection automatique, par l'unité de commande (201), dudit mode de fonctionnement parmi un mode bas, un mode moyen et un mode haut, en fonction des données provenant des contacteurs de verrouillage des freins, de l'état du sol, des données relatives au véhicule et des données relatives au champ ;
l'actionnement, par l'intermédiaire de l'unité de commande (201), soit de l'unité de freinage de la roue arrière intérieure gauche, soit de l'unité de freinage de la roue arrière intérieure droite, afin de freiner sélectivement, respectivement, la roue arrière intérieure gauche ou la roue arrière intérieure droite lorsque le véhicule effectue respectivement un virage à gauche ou un virage à droite, conformément au mode sélectionné.

2. Procédé selon la revendication 1, le véhicule comprenant un seul moteur de traction pour les roues avant du véhicule et un seul moteur de traction pour les roues arrière du véhicule, le procédé comprenant en outre une étape consistant à vérifier (403), par l'unité de commande (201), si le mode bas a été sélectionné et si un angle de braquage est supérieur à un premier angle prédéfini ; si l'angle de braquage est supérieur au premier angle prédéfini, le procédé comprend :
la vérification (403), par l'unité de commande (201), visant à déterminer si le mode bas a été sélectionné et si un angle de braquage est supérieur à un premier angle prédéfini ; si l'angle de braquage est supérieur au premier angle prédéfini, le procédé comprend :
la vérification (405), par l'unité de commande (201), visant à déterminer si l'angle de braquage est positif ;
l'actionnement (406), par l'unité de commande (201), du freinage d'une roue arrière intérieure gauche du véhicule, si l'angle de braquage n'est pas positif, et l'actionnement (407), par l'unité de commande (201), du freinage d'une roue arrière intérieure droite du véhicule, si l'angle de braquage est positif ;
la vérification (408, 409), par l'unité de commande (201), visant à déterminer si le mode moyen a été sélectionné et si un angle de braquage est supérieur à un deuxième angle prédéfini ; si l'angle de braquage est supérieur au deuxième angle prédéfini, le procédé comprend :
la vérification (410), par l'unité de commande (201), visant à déterminer si l'angle de braquage est positif ;
l'actionnement (411), par l'unité de commande (201), du freinage d'une roue arrière intérieure gauche du véhicule, si l'angle de braquage n'est pas positif ;
l'actionnement (412), par l'unité de commande (201), du freinage d'une roue arrière intérieure droite du véhicule, si l'angle de braquage est positif, et ;
le réglage (413), par l'unité de commande (201), de la vitesse de rotation des roues avant du véhicule à une première vitesse supérieure à celle des roues arrière du véhicule, et
la vérification (414, 415), par l'unité de commande (201), visant à déterminer si le mode haut a été sélectionné et si l'angle de braquage est supérieur à un troisième angle prédéfini ; si l'angle de braquage est supérieur au troisième angle prédéfini, le procédé comprend :
la vérification (416), par l'unité de commande (201), si l'angle de braquage est positif.
l'actionnement (417), par l'unité de commande (201), du freinage d'une roue arrière intérieure gauche du véhicule, si l'angle de braquage n'est pas positif ;
l'actionnement (418), par l'unité de commande (201), du freinage d'une roue arrière intérieure droite du véhicule, si l'angle de braquage est positif, et
le réglage (419), par l'unité de commande (201), de la vitesse de rotation des roues avant du véhicule à une deuxième vitesse supérieure à celle des roues arrière du véhicule.

3. Procédé selon la revendication 1, le véhicule comprenant un moteur de traction indépendant pour chacune des roues avant du véhicule et un seul moteur de traction pour les roues arrière du véhicule, le procédé comprenant en outre :
la vérification (603, 604), par l'unité de commande (201), visant à déterminer si le mode bas a été sélectionné et si un angle de braquage est supérieur à un premier angle prédéfini, le procédé comprenant :
la vérification (605), par l'unité de commande (201), si l'angle de braquage est positif.
l'actionnement (606), par l'unité de commande (201), du freinage d'une roue arrière intérieure gauche du véhicule, si l'angle de braquage n'est pas positif, et
l'actionnement (607), par l'unité de commande (201), du freinage d'une roue arrière intérieure droite du véhicule, si l'angle de braquage est positif.
la vérification (608, 609), par l'unité de commande (201), visant à déterminer si le mode moyen a été sélectionné et si un angle de braquage est supérieur à un deuxième angle prédéfini ; si l'angle de braquage est supérieur au deuxième angle prédéfini, le procédé comprend :
la vérification (610), par l'unité de commande (201), visant à déterminer si l'angle de braquage est positif.
l'actionnement (611), par l'unité de commande (201), du freinage d'une roue arrière intérieure gauche du véhicule ;
l'actionnement (613), par l'unité de commande (201), du freinage d'une roue arrière intérieure droite du véhicule et le réglage (614), par l'unité de commande (201), de la vitesse de la roue avant gauche à une valeur supérieure à celle de la roue avant droite, si l'angle de braquage est positif, et
le réglage (615), par l'unité de commande (201), de la vitesse de rotation des roues avant du véhicule à une première vitesse supérieure à celle des roues arrière du véhicule, et
la vérification (616, 617), par l'unité de commande (201), visant à déterminer si le mode haut a été sélectionné et si un angle de braquage est supérieur à un troisième angle prédéfini ; si l'angle de braquage est supérieur au troisième angle prédéfini, le procédé comprend :
la vérification (618), par l'unité de commande (201), visant à déterminer si l'angle de braquage est positif.
l'actionnement (619), par l'unité de commande (201), du freinage d'une roue arrière intérieure gauche du véhicule et le réglage (620), par l'unité de commande (201), de la vitesse de la roue avant droite à une valeur supérieure à celle de la roue avant gauche, si l'angle de braquage n'est pas positif.
l'actionnement (621), par l'unité de commande (201), du freinage d'une roue arrière intérieure droite du véhicule et le réglage (622), par l'unité de commande (201), de la vitesse de la roue avant gauche à une première vitesse supérieure à la vitesse de la roue avant droite, si l'angle de braquage est positif, et
le réglage (623), par l'unité de commande (201), de la vitesse de rotation des roues avant du véhicule à une deuxième vitesse supérieure à celle des roues arrière du véhicule.

4. Procédé selon la revendication 1, les roues avant et les roues arrière du véhicule étant équipées de moteurs de traction indépendants, et le procédé comprenant en outre
la vérification (803, 804), par l'unité de commande (201), visant à déterminer si le mode bas a été sélectionné et si un angle de braquage est supérieur à un premier angle prédéfini ; si l'angle de braquage est supérieur au premier angle prédéfini, le procédé comprend :
la vérification (805), par l'unité de commande (201), visant à déterminer si l'angle de braquage est positif.
l'actionnement (806), par l'unité de commande (201), du freinage d'une roue arrière intérieure gauche du véhicule, si l'angle de braquage n'est pas positif, et
la vérification (808, 809), par l'unité de commande (201), visant à déterminer si le mode moyen a été sélectionné et si un angle de braquage est supérieur à un deuxième angle prédéfini ; si l'angle de braquage est supérieur au deuxième angle prédéfini, le procédé comprend :
la vérification (810), par l'unité de commande (201), visant à déterminer si l'angle de braquage est positif.
l'actionnement (811), par l'unité de commande (201), du freinage d'une roue arrière intérieure gauche du véhicule, si l'angle de braquage n'est pas positif ;
l'actionnement (813), par l'unité de commande (201), du freinage d'une roue arrière intérieure droite du véhicule, si l'angle de braquage est positif, et ;
le réglage (815), par l'unité de commande (201), de la vitesse de rotation des roues avant du véhicule à une première vitesse supérieure à celle des roues arrière du véhicule, et.
la vérification (816, 817), par l'unité de commande (201), visant à déterminer si le mode haut a été sélectionné et si un angle de braquage est supérieur à un troisième angle prédéfini ; si l'angle de braquage est supérieur au troisième angle prédéfini, le procédé comprend :
la vérification (818), par l'unité de commande (201), visant à déterminer si l'angle de braquage est positif.
l'actionnement (819), par l'unité de commande (201), du freinage d'une roue arrière intérieure gauche du véhicule et le réglage (820), par l'unité de commande (201), de la vitesse de la roue avant droite à une valeur supérieure à celle de la roue avant gauche, si l'angle de braquage n'est pas positif.
l'actionnement (821), par l'unité de commande (201), du freinage d'une roue arrière intérieure droite du véhicule et le réglage (822), par l'unité de commande (201), de la vitesse de la roue avant gauche à une première vitesse supérieure à la vitesse de la roue avant droite, si l'angle de braquage est positif, et
le réglage (823), par l'unité de commande (201), de la vitesse de rotation des roues avant du véhicule à une deuxième vitesse supérieure à celle des roues arrière du véhicule.

5. Procédé selon la revendication 1, **caractérisé par le fait que** le procédé comprend la sélection, par l'unité de commande (201), du mode bas, si
le bout de champ nécessaire pour le mode bas est égal à la somme du rayon de braquage du véhicule, de la moitié de la largeur de travail du véhicule et d'une distance de sécurité, et
l'angle de braquage du volant du véhicule est supérieur à un premier angle prédéfini.
en mode bas, le procédé consistant à demander à l'utilisateur de sauter deux rangées, puis de tenter un demi-tour en bout de champ ;
la sélection, par l'unité de commande (201), du mode moyen, si
le bout de champ nécessaire pour le mode moyen est égal à la somme du rayon de braquage du véhicule, de la moitié de la largeur de travail du véhicule et
l'angle de braquage du volant du véhicule est supérieur à une deuxième angle prédéfini.
en mode moyen, le procédé consistant à demander à l'utilisateur de sauter une rangée, puis de tenter de faire un demi-tour en bout de champ, et
la sélection, par l'unité de commande (201), du mode haut, si le bout de champ nécessaire pour le mode bas est égal à la somme du rayon de braquage du véhicule, de la moitié de la largeur de travail du véhicule, minus une distance de sécurité, et
l'angle de braquage du volant du véhicule est supérieur à un troisième angle prédéfini.
en mode haut, le procédé consistant à demander à l'utilisateur de sauter une rangée, puis de tenter de faire un demi-tour en bout de champ

6. Procédé selon la revendication 1, **caractérisé par le fait qu'**il comprend :
la vérification, par l'unité de commande (201), visant à déterminer si l'angle de braquage est supérieur à un angle minimal ou inférieur à un angle maximal, et
la réalisation, par l'unité de commande (201), d'au moins l'une des opérations suivantes
actionner les freins du véhicule, ou
régler la vitesse du véhicule,
si l'angle de braquage est supérieur à l'angle minimal ou inférieur à l'angle maximal.

7. Un système (200) destiné à assister un véhicule électrique lors des manœuvres en bout de champ, le système (200) comprenant :
une unité de commande (201), et
un capteur de traction (204),
l'unité de commande (201) étant configurée pour :
la lecture des données provenant des capteurs d'angle de braquage, des données provenant des capteurs de vitesse des roues avant, des données provenant des capteurs de vitesse des roues arrière, des données provenant des contacteurs de verrouillage des freins, des données sur l'état du sol provenant du capteur de traction (204), des données relatives au véhicule et des données relatives au champ ;
la vérification visant à déterminer si un contacteur de verrouillage des freins est en position OFF et si la vitesse du véhicule est inférieure à un seuil de vitesse prédéfini, afin de déterminer si un mode de fonctionnement permettant d'effectuer un virage en bout de champ doit être sélectionné automatiquement ;
la sélection automatiquement dudit mode de fonctionnement pour effectuer un virage en bout de champ lors d'une manœuvre en bout de champ, ledit mode de fonctionnement étant l'un des modes suivants : mode bas, mode moyen ou mode haut, en fonction des données provenant des contacteurs de verrouillage des freins, des données relatives à l'état du sol, des données du véhicule et des données de terrain ;
l'actionnement soit de l'unité de freinage de la roue arrière intérieure gauche, soit de l'unité de freinage de la roue arrière intérieure droite, afin de freiner sélectivement, respectivement, la roue arrière intérieure gauche ou la roue arrière intérieure droite lorsque le véhicule effectue respectivement un virage à gauche ou un virage à droite, conformément au mode sélectionné.

8. Le système, selon la revendication 7, le véhicule comprenant un seul moteur de traction pour les roues avant du véhicule et un seul moteur de traction pour les roues arrière du véhicule, l'unité de commande (201) étant configuré en outre pour :
vérifier si le mode bas a été sélectionné et si un angle de braquage est supérieur à un premier angle prédéfini ; si l'angle de braquage est supérieur au premier angle prédéfini :
vérifier si l'angle de braquage est positif ;
actionner le freinage d'une roue arrière intérieure gauche du véhicule, si l'angle de braquage n'est pas positif, et
actionner le freinage d'une roue arrière intérieure droite du véhicule, si l'angle de braquage est positif ;
vérifier si le mode moyen a été sélectionné et si un angle de braquage est supérieur à un deuxième angle prédéfini ; si l'angle de braquage est supérieur à un deuxième angle prédéfini :
vérifier si l'angle de braquage est positif ;
actionner le freinage de une roue arrière intérieure gauche du véhicule, si l'angle de braquage n'est pas positif ;
actionner le freinage d'une roue arrière intérieure droite du véhicule, si l'angle de braquage est positif,
définir la vitesse de rotation des roues avant du véhicule comme une première vitesse supérieure à la vitesse des roues arrière du véhicule, et
vérifier si le mode haut a été sélectionné et si l'angle de braquage est supérieur à un troisième angle prédéfini ; si l'angle de braquage est supérieur au troisième angle prédéfini :
vérifier si l'angle de braquage est positif.
actionner le freinage de une roue arrière intérieure gauche du véhicule, si l'angle de braquage n'est pas positif ;
actionner le freinage d'une roue arrière intérieure droite du véhicule, si l'angle de braquage est positif,
définir la vitesse de rotation des roues avant du véhicule comme une deuxième vitesse supérieure à la vitesse des roues arrière du véhicule.

9. Le système, selon la revendication 8, le véhicule comprenant un moteur de traction indépendant pour chacune des roues avant du véhicule et un seul moteur de traction pour les roues arrière du véhicule, l'unité de commande (201) étant configuré en outre pour :
vérifier si le mode bas a été sélectionné et si un angle de braquage est supérieur à un premier angle prédéfini ; si l'angle de braquage est supérieur au premier angle prédéfini :
vérifier si l'angle de braquage est positif ;
actionner le freinage de la roue arrière intérieure gauche du véhicule, si l'angle de braquage n'est pas positif, et
actionner le freinage d'une roue arrière intérieure droite du véhicule, si l'angle de braquage est positif ;
vérifier si le mode moyen a été sélectionné et si un angle de braquage est supérieur à un deuxième angle prédéfini ; si l'angle de braquage est supérieur à un deuxième angle prédéfini :
vérifier si l'angle de braquage est positif ;
actionner le freinage d'une roue arrière intérieure gauche du véhicule ;
actionner le freinage de la roue arrière droite intérieure du véhicule et régler la vitesse de la roue avant gauche de manière à ce qu'elle soit supérieure à celle de la roue avant droite, si l'angle est positif, et
définir la vitesse de rotation des roues avant du véhicule comme une première vitesse supérieure à la vitesse des roues arrière du véhicule, et
vérifier si le mode haut a été sélectionné et si l'angle de braquage est supérieur à un troisième angle prédéfini ; si l'angle de braquage est supérieur au troisième angle prédéfini :
vérifier si l'angle de braquage est positif.
actionner le freinage de la roue arrière gauche intérieure du véhicule et régler la vitesse de la roue avant droite à une première vitesse supérieure à celle de la roue avant gauche, si l'angle de braquage n'est pas positif ;
actionner le freinage de la roue arrière droite intérieure du véhicule et régler la vitesse de la roue avant gauche à une première vitesse supérieure à celle de la roue avant droite, si l'angle de braquage est positif, et
définir la vitesse de rotation des roues avant du véhicule comme une deuxième vitesse supérieure à la vitesse des roues arrière du véhicule.

10. Le système selon la revendication 8, les roues avant et les roues arrière du véhicule étant équipées de moteurs de traction indépendants, l'unité de commande (201) étant configurée en outre pour :
vérifier si le mode bas a été sélectionné et si un angle de braquage est supérieur à un premier angle prédéfini ; si l'angle de braquage est supérieur au premier angle prédéfini :
vérifier si l'angle de braquage est positif ;
actionner le freinage de la roue arrière intérieure gauche du véhicule, si l'angle de braquage n'est pas positif, et
actionner le freinage d'une roue arrière intérieure droite du véhicule, si l'angle de braquage est positif ;
vérifier si le mode moyen a été sélectionné et si un angle de braquage est supérieur à un deuxième angle prédéfini ; si l'angle de braquage est supérieur à un deuxième angle prédéfini :
vérifier si l'angle de braquage est positif ;
actionner le freinage de une roue arrière intérieure gauche du véhicule, si l'angle de braquage n'est pas positif ;
actionner le freinage d'une roue arrière intérieure droite du véhicule, si l'angle de braquage est positif,
définir la vitesse de rotation des roues avant du véhicule comme une première vitesse supérieure à la vitesse des roues arrière du véhicule, et
vérifier si le mode haut a été sélectionné et si l'angle de braquage est supérieur à un troisième angle prédéfini ; si l'angle de braquage est supérieur au troisième angle prédéfini :
vérifier si l'angle de braquage est positif.
actionner le freinage de la roue arrière gauche intérieure du véhicule et régler la vitesse de la roue avant droite à une première vitesse supérieure à celle de la roue avant gauche, si l'angle de braquage n'est pas positif ;
actionner le freinage de la roue arrière droite intérieure du véhicule et régler la vitesse de la roue avant gauche à une première vitesse supérieure à celle de la roue avant droite, si l'angle de braquage n'est pas positif, et
définir la vitesse de rotation des roues avant du véhicule comme une deuxième vitesse supérieure à la vitesse des roues arrière du véhicule.

11. Le système selon la revendication 8, l'unité de commande (201) étant en outre configurée pour :
sélectionner le mode bas, si
le bout de champ nécessaire pour le mode bas est égal à la somme du rayon de braquage du véhicule, de la moitié de la largeur de travail du véhicule et d'une distance de sécurité, et
l'angle de braquage du volant du véhicule est supérieur à un premier angle prédéfini.
en mode bas, l'unité de commande étant configurée pour demander à l'utilisateur de sauter deux rangées, puis de tenter un demi-tour en bout de champ ;
sélectionner le mode moyen, si
le bout de champ nécessaire pour le mode moyen est égal à la somme du rayon de braquage du véhicule, de la moitié de la largeur de travail du véhicule et
l'angle de braquage du volant du véhicule est supérieur à une deuxième angle prédéfini.
en mode moyen, l'unité de commande (201) étant en outre configurée pour demander à l'utilisateur de sauter une rangée, puis de tente un demi-tour en bout de champ, et
sélectionner le mode haut, si
le bout de champ nécessaire pour le mode bas est égal à la somme du rayon de braquage du véhicule, de la moitié de la largeur de travail du véhicule, minus une distance de sécurité, et
l'angle de braquage du volant du véhicule est supérieur à un troisième angle prédéfini.
en mode haut, l'unité de commande (201) étant en outre configurée pour demander à l'utilisateur de sauter une rangée, puis de tente un demi-tour en bout de champ.

12. Le système selon la revendication 8, l'unité de commande (201) étant en outre configurée pour :
la vérification visant à déterminer si l'angle de braquage est supérieur à un angle minimal ou inférieur à un angle maximal, et
la réalisation d'au moins l'une des opérations suivantes :
actionner les freins du véhicule ou
régler la vitesse de celui-ci.
si l'angle de braquage est supérieur à l'angle minimal ou inférieur à l'angle maximal.
